(19)

Europäisches
Patentamt
European
Patent Office
Office européen
des brevets

(11) **EP 4 618 168 A1**

(12) # EUROPEAN PATENT APPLICATION
published in accordance with Art. 153(4) EPC

(43) Date of publication:
**17.09.2025 Bulletin 2025/38**

(21) Application number: **23938814.3**

(22) Date of filing: **30.05.2023**

(51) International Patent Classification (IPC):
***H01M 4/04*** *(2006.01)*

(52) Cooperative Patent Classification (CPC):
**Y02E 60/10**

(86) International application number:
**PCT/CN2023/097237**

(87) International publication number:
**WO 2024/243820 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **XING, Qi
  Ningde, Fujian 352100 (CN)**

• **LIU, Huihui
  Ningde, Fujian 352100 (CN)**
• **ZHANG, Zhenxu
  Ningde, Fujian 352100 (CN)**
• **ZHANG, Xinhui
  Ningde, Fujian 352100 (CN)**

(74) Representative: **von Tietzen und Hennig, Nikolaus
Lorenz Seidler Gossel
Rechtsanwälte Patentanwälte
Partnerschaft mbB
Widenmayerstraße 23
80538 München (DE)**

(54) **POLE PIECE PROCESSING SYSTEM AND METHOD FOR PROCESSING POLE PIECE**

(57)    This application pertains to the field of battery technology, and particularly relates to an electrode sheet processing system and a method for processing an electrode sheet. The electrode sheet processing system includes: an electromagnetic induction heating unit, where the electromagnetic induction heating unit is configured to perform electromagnetic induction heating treatment on an electrode sheet. This application enables reduction of a binder floating on a surface of the electrode sheet and leaves pores in an active layer, increasing a porosity of the electrode sheet and thus increasing an infiltration rate of an electrolyte to the electrode sheet, various burrs and particles at edges of the active layer can be reduced, so that a surface of the active layer is smoother, reducing a surface sharpness of the electrode sheet, thereby reducing a risk of the electrode sheet piercing a separator. Moreover, a conductive agent in the electrode sheet is influenced by magnetic field lines generated during an electromagnetic induction process, aligning in a consistent direction, which is conducive to further reducing a sheet resistance of the electrode sheet.

FIG. 2

EP 4 618 168 A1

**Description**

**TECHNICAL FIELD**

This application pertains to the field of battery technology, and particularly relates to an electrode sheet processing system and a method for processing an electrode sheet.

**BACKGROUND**

With continuous advancements in battery research and increasing market demands, higher requirements have been imposed on various performance aspects of batteries. As a critical component in a battery, an electrode sheet is configured to provide an active material for battery chemical reactions and to conduct electrons. The performance of the electrode sheet, such as wettability and internal resistance, not only affects battery production efficiency (low wettability impacts the duration of an electrolyte injection process during battery production and thus affects production efficiency) but also influences battery performance such as impedance and self-discharge. Therefore, improving the electrode sheet is a key factor in improving battery performance.

**SUMMARY**

In view of the above issues, this application provides an electrode sheet processing system and a method for processing an electrode sheet, which can improve the electrochemical performance of the electrode sheet.

According to a first aspect, this application provides an electrode sheet processing system, including: an electromagnetic induction heating unit, where the electromagnetic induction heating unit is configured to perform electromagnetic induction heating treatment on an electrode sheet.

An embodiment of this application provides an electrode sheet processing system, where an electromagnetic induction heating unit is provided to perform electromagnetic induction heating on an electrode sheet, so that a binder that floats to a surface of the electrode sheet during a drying process is softened (melted) or ablated, which enables reduction of the binder floating on the surface of the electrode sheet and leaves pores in an active layer, increasing the porosity of the electrode sheet, and thus increasing the infiltration rate of an electrolyte to the electrode sheet. In addition, softening (melting) or ablating the binder can also reduce various burrs and particles at edges of the active layer, so that a surface of the active layer is smoother, reducing the surface sharpness of the electrode sheet, thereby reducing the risk of the electrode sheet piercing a separator, which is conducive to improving DCR (direct current resistance), K value (voltage drop), and self-discharge of a battery. Moreover, a conductive agent in the electrode sheet is influenced by magnetic field lines generated during the electromagnetic induction process, aligning in a consistent direction, which is conducive to further reducing the sheet resistance of the electrode sheet.

In some embodiments, the electrode sheet includes a dried active layer. The dried active layer refers to an active layer that has no solvent or has a very low solvent content, with a mass concentration of the solvent in the active layer being down to the ppm level, such as below 1000 ppm. The binder floats on the surface of the dried active layer, and the electromagnetic induction heating unit in these embodiments of this application is configured to perform electromagnetic induction heating treatment on the electrode sheet with the dried active layer, enabling treatment of the floating binder and improving the performance of the electrode sheet.

In some embodiments, the electromagnetic induction heating unit includes an induction coil, where the induction coil is configured to generate alternating magnetic induction lines parallel to the electrode sheet.

The induction coil in these embodiments of this application generates alternating magnetic induction lines parallel to the electrode sheet, enabling generation of an induced alternating current at the same frequency in the electrode sheet. When the induced alternating current passes through the electrode sheet, the alternating current tends to flow along the surface of the electrode sheet, with a higher current density at the surface of the electrode sheet and a lower current density inside the electrode sheet, where the current is primarily concentrated at the surface of the electrode sheet, and at a position closer to the surface, the current density is higher, producing a "skin effect". This skin effect enables rapid heating of the surface of the electrode sheet, quickly raising a surface temperature of the electrode sheet, so that the floating binder, edge burrs, and edge particles can be ablated. In addition, since the interior of the electrode sheet is minimally affected by magnetic field lines of an alternating magnetic field, with lower current density, the temperature rise of a current collector inside the electrode sheet is small, mitigating softening or deformation of the current collector due to high temperatures and improving the adhesion strength between an active material and the current collector in the electrode sheet.

In some embodiments, the electrode sheet processing system further includes a temperature measurement unit, where the temperature measurement unit is configured to measure a temperature of the electrode sheet. By providing the temperature measurement unit, the temperature of the electrode sheet can be promptly and accurately monitored, enabling state monitoring of the electrode sheet.

In some embodiments, the temperature measurement unit includes an infrared temperature measurement module. By virtue of infrared temperature measurement, non-contact temperature measurement of the electrode sheet can be achieved.

In some embodiments, the electrode sheet processing system further includes an automatic temperature control unit, where the automatic temperature control unit is configured to control heating parameters of the electromagnetic induction heating unit.

In the electrode sheet processing system of these embodiments of this application, by providing the automatic temperature control unit, the heating parameters of the electromagnetic induction heating unit (such as temperature, frequency, and current) can be controlled based on the temperature of the electrode sheet. When the temperature of the electrode sheet is too low, the heating power (or temperature, or current) of the electromagnetic induction heating unit can be controlled to increase, thereby raising the temperature of the electrode sheet; and when the temperature of the electrode sheet is too high, the heating power (or temperature, or current) of the electromagnetic induction heating unit can be controlled to decrease, thereby lowering the temperature of the electrode sheet. In some cases, a high-precision infrared temperature measurement module is used as a temperature measurement component of the temperature measurement unit, and under the control of a high-precision automatic control unit, precise control with a temperature accuracy within $\pm 3°C$ can be achieved. Therefore, the use of the automatic temperature control unit enables precise and flexible control of the temperature of the electrode sheet, maintaining the temperature of the electrode sheet within an appropriate range, thereby effectively softening and decomposing excess binder in the electrode sheet.

According to a second aspect, this application provides a method for processing an electrode sheet, where the electrode sheet includes a current collector and an active layer, the active layer is disposed on at least one side of the current collector, the active layer includes a binder, and the method for processing an electrode sheet includes: performing electromagnetic induction heating treatment on the electrode sheet to ensure that a surface temperature of the active layer is greater than or equal to a softening temperature or a melting temperature of the binder and that a temperature of the current collector is less than a deformation temperature of the current collector.

In the method of this embodiment of this application, electromagnetic induction heating treatment is performed on the electrode sheet, the active layer typically contains a conductive agent, and the conductive agent in the active layer generates heat upon electromagnetic induction, thereby achieving electromagnetic induction heating of the active layer. During the electromagnetic induction heating, the surface temperature of the active layer is made greater than or equal to the softening temperature or melting temperature of the binder. At this temperature, the binder that floats to the surface of the active layer during the drying process of the electrode sheet softens or melts, or is even ablated. By softening (melting) or ablating, the floating binder on the active layer surface can be reduced, and the ablated binder leaves pores in the active layer, increasing the porosity of the electrode sheet, and thus increasing the electrolyte infiltration rate. In addition, softening (melting) or ablating the binder can also reduce various burrs and particles at edges of the active layer, so that the surface of the active layer is smoother, reducing the surface sharpness of the electrode sheet, thereby reducing the risk of the electrode sheet piercing a separator, which is conducive to improving DCR (direct current resistance), K value (voltage drop), and self-discharge of the battery. In addition, the conductive agent contained in the active layer is influenced by magnetic field lines generated during the electromagnetic induction process, aligning in a consistent direction, which is conducive to further reducing the sheet resistance of the electrode sheet.

Additionally, after the electromagnetic induction heating treatment, the temperature of the current collector is less than the deformation temperature of the current collector, thereby mitigating softening or deformation of the current collector due to high temperatures, maintaining good adhesion and conductivity between the current collector and the active layer, helping to reduce the sheet resistance of the electrode sheet, and mitigating issues such as electrode sheet burnout or powder shedding.

In some embodiments, the electromagnetic induction heating treatment step includes: making the electrode sheet pass through an interior of an induction coil and applying an alternating current to the induction coil.

In these embodiments of this application, by making the electrode sheet pass through the interior of the induction coil, an alternating magnetic field is generated after an alternating current passes through the induction coil, and the alternating magnetic field generates an induced alternating current at a corresponding frequency in the electrode sheet. When the induced alternating current passes through the electrode sheet, the alternating current tends to flow along the surface of the electrode sheet, with a higher current density at the surface of the electrode sheet and a lower current density inside the electrode sheet, where the current is primarily concentrated at the surface of the electrode sheet, and at a position closer to the surface, the current density is higher, producing a "skin effect". This skin effect enables rapid heating of the surface of the electrode sheet, quickly raising the surface temperature of the electrode sheet, so that the floating binder, edge burrs, and edge particles can be ablated. In addition, since the current density inside the electrode sheet is lower, the issue of softening or deformation of the current collector inside the electrode sheet due to high temperatures can be mitigated, thereby enhancing the adhesion strength between the active layer and the current collector of the electrode sheet.

In some embodiments, an induction frequency of the electromagnetic induction heating treatment is greater than or equal to 5 kHz; optionally, the induction frequency of the electromagnetic induction heating treatment is 10 kHz to 50 kHz; and optionally, the induction frequency of the electromagnetic induction heating treatment is 10 kHz to 20 kHz.

The induction frequency of the electromagnetic induction heating treatment can be regarded as an output frequency after an alternating current is applied to the induction coil, where an alternating magnetic field is generated after an alternating current passes through the induction coil, and the alternating magnetic field generates an induced alternating current at a corresponding frequency in the electrode sheet. The induction frequency of the electromagnetic induction heating treatment affects the depth of action on the electrode sheet. At the induction frequency mentioned in these embodiments of this application, the active layer of the electrode sheet can be inductively heated with a small heating effect on the current collector inside the electrode sheet, which is conducive to maintaining the adhesion and conductivity between the current collector and the active layer. The active layer is tightly bonded with the current collector, which is conducive to stability during charge-discharge cycles (the active layer is less likely to be detached from the current collector) and also improves kinetic performance.

In some embodiments, the number of turns of the induction coil is 2 to 10; and optionally, the number of turns of the induction coil is 2 to 5. The number of turns of the induction coil is an important factor affecting its performance. Generally, with the same current magnitude, a larger number of the turns results in a stronger induced magnetic field generated by the induction coil. Using an appropriate number of turns for the induction coil can not only meet the induction strength requirements but also reduce equipment costs and reduce resource waste.

In some embodiments, the electrode sheet moves relative to the induction coil; optionally, a moving speed of the electrode sheet relative to the induction coil is 10 m/min to 100 m/min; and optionally, the moving speed of the electrode sheet relative to the induction coil is 40 m/min to 80 m/min. By controlling the movement of the electrode sheet relative to the induction coil, the duration of the electromagnetic induction heating for the electrode sheet can be adjusted to control the temperature of the electrode sheet; moreover, batch processing of electrode sheets can be implemented, improving processing efficiency.

In some embodiments, the surface temperature of the active layer is 100°C to 450°C; and optionally, the surface temperature of the active layer is 220°C to 400°C. When the surface of the active layer reaches these temperature ranges, the binder on the surface of the electrode sheet can be softened (melted) or even ablated, and after heat reaches the internal current collector through heat transfer, a temperature of the current collector is less than a deformation temperature of the current collector.

According to a third aspect, this application provides an electrode sheet, where the electrode sheet is obtained by processing performed using the method according to the second aspect.

In the electrode sheet obtained by processing performed using the above method, the floating binder is softened (melted) or ablated, thereby reducing the floating binder. In addition, the softened (melted) or ablated binder leaves pores in the active layer, increasing the porosity of the electrode sheet, and thus increasing the electrolyte infiltration rate; and various burrs and particles at the edges of the electrode sheet are reduced, so that the surface of the electrode sheet is smoother, reducing the sharpness, thereby reducing the risk of the electrode sheet piercing a separator. Additionally, the conductive agent in the active layer is influenced by magnetic field lines generated during the electromagnetic induction process, aligning in a consistent direction, which is conducive to further reducing the sheet resistance of the electrode sheet. These properties are all conducive to improving the DCR, K value, and self-discharge of the battery.

According to a fourth aspect, this application provides a battery, where the battery includes the electrode sheet according to the third aspect.

The battery of this embodiment of this application includes the above electrode sheet, where the electrode sheet may be a positive electrode sheet or a negative electrode sheet, or may include both a positive electrode sheet and a negative electrode sheet. Since the floating binder in the electrode sheet of the battery is softened (melted) or ablated, the floating binder is reduced. The electrode sheet has increased porosity due to the softening (melting) or ablation of the binder, which is conducive to increasing the electrolyte infiltration rate; and various burrs and particles at the edges of the electrode sheet are reduced, so that the surface of the electrode sheet is smoother, reducing the sharpness, thereby reducing the risk of the electrode sheet piercing a separator, which is conducive to improving the DCR, K value, and self-discharge of the battery. Additionally, the conductive agent in the active layer is influenced by magnetic field lines generated during the electromagnetic induction process, aligning in a consistent direction, which is conducive to further reducing the sheet resistance of the electrode sheet. Therefore, the battery including the above electrode sheet exhibits good DCR, K value, and self-discharge performance.

According to a fifth aspect, this application provides an electric apparatus, where the electric apparatus includes the battery according to the fourth aspect.

The battery disclosed in the embodiments of this application can be used in an electric apparatus using a battery as a power source or in various energy storage systems using a battery as an energy storage element to provide electrical energy. The electric apparatus may include, but is not limited to, mobile phones, tablets, laptops, electric toys, electric tools, electric bicycles, electric vehicles, ships, and spacecraft. The electric toys may include fixed or mobile electric toys, such as game consoles, electric toy cars, electric toy ships, and electric toy airplanes, while the spacecraft may include airplanes, rockets, space shuttles, and spaceships, and the like. A battery cell, a battery module, or a battery pack in a secondary battery can be selected based on the use requirements of the electric apparatus.

**BRIEF DESCRIPTION OF DRAWINGS**

To more clearly illustrate the technical solutions in the embodiments of this application, the drawings required for use in the description of the embodiments or the prior art are briefly introduced below. It is apparent that the drawings described below are merely some embodiments of this application, and those of ordinary skill in the art can still obtain other drawings based on these drawings without creative effort.

FIG. 1 is a schematic structural diagram of an electrode sheet passing through an interior of an induction coil in an embodiment of this application.
FIG. 2 is a schematic structural diagram of an electrode sheet processing system in Example 1 of this application.
FIG. 3 is a schematic diagram of a positional relationship between an electrode sheet and an induction coil in Comparative Example 5 of this application.
FIG. 4 is a photograph of electrode sheets in Examples 2 to 4, Comparative Example 1, and Comparative Example 4 of this application.
FIG. 5 is a schematic diagram of a battery module in an embodiment of this application.
FIG. 6 is a schematic diagram of a battery pack in an embodiment of this application.
FIG. 7 is an exploded view of the battery pack in the embodiment of this application shown in FIG. 6.
FIG. 8 is a schematic diagram of a battery in an embodiment of this application.
FIG. 9 is an exploded view of the battery in the embodiment of this application shown in FIG. 8.
FIG. 10 is a schematic diagram of an electric apparatus using a battery as a power source in an embodiment of this application.

Reference signs:

10. electrode sheet; 20. electromagnetic induction heating unit; 21. metal sleeve; 22. induction coil; 30. transport unit; 31. unwinding guide roller; 32. winding guide roller; 40. temperature measurement unit; 50. blowing unit; D. transport direction of electrode sheet; 1. battery pack; 2. upper box body; 3. lower box body; 4. battery module; 5. battery cell; 51. shell; 52. electrode assembly; and 53. cover plate.

**DESCRIPTION OF EMBODIMENTS**

The embodiments of the technical solutions of this application are described in detail below in conjunction with the drawings. The following embodiments are merely intended for a clearer description of the technical solutions of this application and therefore are used as just examples which do not constitute any limitations on the protection scope of this application.

Unless otherwise defined, all technical and scientific terms used herein have the same meaning as commonly understood by those skilled in the technical field of this application; the terms used herein are for the purpose of describing specific embodiments only and are not intended to limit this application; and the terms "include", "comprise", and any variations thereof in the description, claims, and the above description of the drawings of this application are intended to cover non-exclusive inclusion.

In the description of the embodiments of this application, technical terms such as "first" and "second" are merely used to distinguish between different objects and should not be understood as indicating or implying relative importance or implicitly indicating the number, specific order, or primary-secondary relationship of the indicated technical features. In the description of the embodiments of this application, "a plurality of" means two or more, unless otherwise explicitly and specifically defined.

In this specification, reference to "embodiment" means that specific features, structures, or characteristics described with reference to the embodiment may be incorporated in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. Additionally, the character "/" herein generally indicates that the contextually associated objects are in an "or" relationship.

In the description of the embodiments of this application, the term "at least one" refers to one or more, and "a plurality of" refers to two or more. "At least one of the following" or similar expressions refer to any combination of these items, including any combination of single item(s) or plural item(s). For example, "at least one of a, b, or c" or "at least one of a, b, and c" may both represent: a, b, c, a-b (that is, a and b), a-c, b-c, or a-b-c, where a, b, and c may each be single or plural.

It should be understood that in various embodiments of this application, the sequence numbers of the processes mentioned above do not imply the order of execution, and some or all steps may be executed in parallel or in sequence. The execution order of the processes should be determined by the function and internal logic thereof and should not constitute any limitation on the implementation process of the embodiments of this application.

The weight of related components mentioned in the specification of the embodiments of this application may not only refer to the specific content of each component but may also represent the proportional relationship of the weights of the components. Therefore, as long as the percentage of the related components is scaled up or down in proportion according to the specification of the embodiments of this application, it is within the scope disclosed by the specification of the embodiments of this application. Specifically, the mass mentioned in the specification of the embodiments of this application may be mass units commonly known in the chemical field, such as $\mu$g, mg, g, and kg.

As a critical component in a battery, an electrode sheet is configured to provide an active material for battery chemical reactions and to conduct electrons. A preparation process of the electrode sheet typically includes: mixing an electrode active material, a conductive agent, a binder, and a solvent to form a slurry, applying the slurry onto a surface of a current collector, and then performing drying, rolling, and the like. The purpose of drying is primarily to remove the solvent from the slurry and increase pores of the electrode sheet. During the drying process, the solvent in the slurry migrates to the surface of the electrode sheet and evaporates due to a capillary force, while the commonly used binder, with low density and large specific surface area, is likely to migrate to the surface of the electrode sheet along with the evaporation of the solvent, resulting in the issue of binder flotation. After drying, the rolling process is performed, and after the required compacted density and electrode sheet thickness are achieved through rolling, typically no further electrode sheet processing steps are required, and the electrode sheet is directly cut and used for cell assembly. Therefore, the issue of binder flotation during the drying process remains unresolved. Binder flotation leads to various issues, for example: the floating binder blocks the pores on the surface of the electrode sheet, resulting in poor wetting effect of the electrode sheet; reduced adhesion strength of the active material on the current collector makes the electrode sheet prone to powder shedding, which increases the internal resistance of the electrode sheet; during a subsequent cutting process, the electrode sheet is likely to have issues such as edge burrs, particles, and thickness rebound; and these burrs and particles may easily pierce the separator in the cell, causing cell defects, increasing costs, posing hidden safety hazards during the subsequent use of electric apparatuses, and the like.

To address the above issues, in related technologies, slurry rotation is controlled during slurry preparation to improve the uniformity of the binder in the slurry; alternatively, a baking temperature is optimized, or the electrode sheet is reversed for reverse baking after a period of baking; alternatively, traditional high-temperature drying is replaced with a supercritical fluid drying technology, or the electrode sheet is subjected to surface treatment using methods such as corona treatment or laser perforation. However, from a kinetic analysis of binder flotation, regardless of how uniform the binder dispersion is in the slurry, how the baking temperature is controlled, how the baking direction is changed, or what drying method is used, the phenomenon of binder migration and redistribution during the drying process is inevitable. In addition, corona treatment, laser perforation, and the like are only used to treat the surface of the electrode sheet and cannot affect the interior of the electrode sheet, resulting in limited improvement in the wetting effect and other effects of the electrode sheet.

In response to the phenomenon of binder flotation, in related technologies, generally the drying methods or the slurry are improved. Since it is difficult to address binder flotation during the drying process, further processing of the electrode sheet can be performed after binder flotation has occurred, so as to improve the distribution situation of the binder in the electrode sheet.

By performing electromagnetic induction heating treatment on an already dried electrode sheet, during the electromagnetic induction heating process, the binder that has floated to the surface of the electrode sheet can be softened (melted) or ablated. After the floating binder is softened (melted) or ablated, pores are left in the electrode sheet, which can increase the porosity of the electrode sheet, thereby increasing the electrolyte absorption rate of the electrode sheet. In addition, edge burrs and particles caused by the floating binder can also be reduced. Moreover, the conductive agent in the active layer is influenced by magnetic field lines generated during the electromagnetic induction process, aligning in a consistent direction, which is conducive to further reducing the sheet resistance of the electrode sheet.

This application is further described below in conjunction with embodiments. It should be understood that these embodiments are merely used to describe this application but not to limit the scope of this application.

According to a first aspect, an embodiment of this application provides an electrode sheet processing system, including: an electromagnetic induction heating unit, where the electromagnetic induction heating unit is configured to perform electromagnetic induction heating treatment on an electrode sheet.

An embodiment of this application provides an electrode sheet processing system, where an electromagnetic induction heating unit is provided to perform electromagnetic induction heating on an electrode sheet, a binder that floats to the surface of the electrode sheet during the drying process is softened (melted) or ablated, which enables reduction of the binder floating on the surface of the electrode sheet and leaving pores in an active layer, increasing the porosity of the electrode sheet, and thus increasing the infiltration rate of an electrolyte to the electrode sheet. In addition, softening (melting) or ablating the binder can also reduce various burrs and particles at edges of the active layer, so that a surface of the active layer is smoother, reducing the surface sharpness of the electrode sheet, thereby reducing the risk of the electrode sheet piercing a separator, which is conducive to improving DCR (direct current resistance), K value (voltage drop), and self-discharge of a battery. Moreover, a conductive agent in the electrode sheet is influenced by magnetic field lines generated during the electromagnetic induction process, aligning in a consistent direction, which is conducive to further reducing the sheet resistance of the electrode sheet.

Additionally, the electrode sheet processing system of this embodiment of this application can be integrated into an existing electrode sheet production line, and only an electromagnetic induction heating unit is additionally provided on the existing electrode sheet production line, without the need for significant additional time or equipment, resulting in low costs.

In some implementations, the electrode sheet includes a dried active layer. The dried active layer refers to an active layer that has no solvent or has a very low solvent content, with a mass concentration of the solvent in the active layer being down to the ppm level, such as below 1000 ppm. The binder floats on the surface of the dried active layer, and the electromagnetic induction heating unit in this embodiment of this application is configured to perform electromagnetic induction heating treatment on the electrode sheet with the dried active layer, enabling treatment of the floating binder and improving the performance of the electrode sheet.

In some implementations, the electromagnetic induction heating unit includes an induction coil, where the induction coil is configured to generate alternating magnetic induction lines parallel to the electrode sheet.

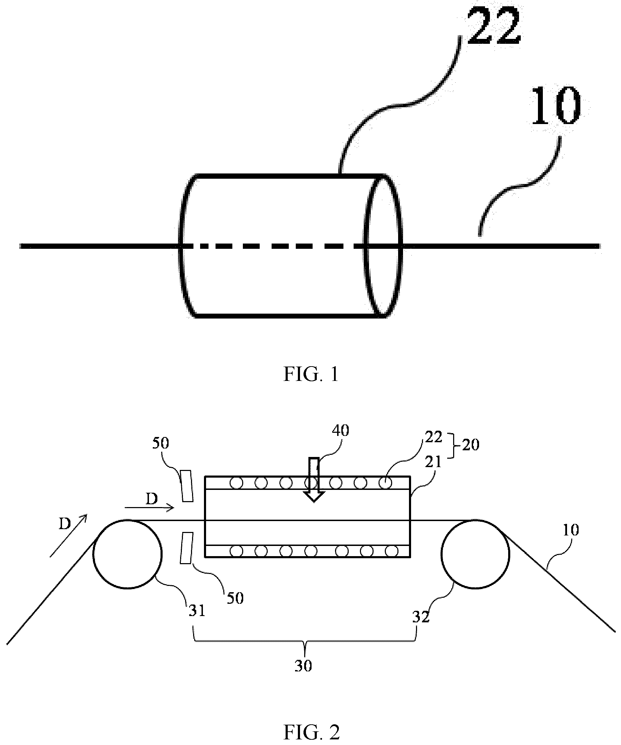

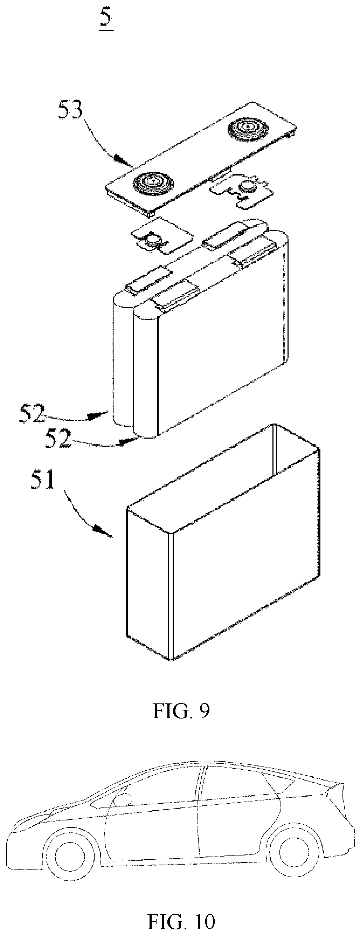

The induction coil, also known as an inductor coil, is an electrical component including one or more coils, and each coil is formed by a wound conductor. When a current passes through the coil, a magnetic field is generated around the coil. The conductor which is wound to form the coil is typically a copper wire or aluminum wire with good conductivity and corrosion resistance, another metal wire, or a metal sheet. In operation, the electrode sheet may be made to pass through an interior of the induction coil, so that the induction coil generates alternating magnetic induction lines parallel to the electrode sheet. The interior of the induction coil refers to an internal hollow region formed by the one or more coils constituting the induction coil. The electrode sheet passing through the interior of the induction coil means that the electrode sheet is placed in the hollow region inside the induction coil, as shown in the schematic diagram of FIG. 1. In FIG. 1, 10 represents the electrode sheet and 22 represents the induction coil.

The induction coil in this embodiment of this application generates alternating magnetic induction lines parallel to the electrode sheet, enabling generation of an induced alternating current at the same frequency in the electrode sheet. When the induced alternating current passes through the electrode sheet, the alternating current tends to flow along the surface of the electrode sheet, with a higher current density at the surface of the electrode sheet and a lower current density inside the electrode sheet, where the current is primarily concentrated at the surface of the electrode sheet, and at a position closer to the surface, the current density is higher, producing a "skin effect". This skin effect enables rapid heating of the surface of the electrode sheet, quickly raising the surface temperature of the electrode sheet, so that the floating binder, edge burrs, and edge particles can be ablated. In addition, since the interior of the electrode sheet is minimally affected by the magnetic field lines of the alternating magnetic field, with lower current density, the temperature rise of a current collector inside the electrode sheet is small, mitigating softening or deformation of the current collector due to high temperatures and improving the adhesion strength between an active material and the current collector in the electrode sheet.

In some implementations, a shape of the induction coil includes, but is not limited to, a circular shape, a square shape, a rectangular shape, or other shapes.

In some implementations, a maximum dimension of a cross section of the induction coil in a direction perpendicular to the electrode sheet is greater than or equal to a minimum dimension of the surface of the electrode sheet. The minimum dimension of the surface of the electrode sheet refers to the shortest distance on the surface of the electrode sheet. The electrode sheet is typically rectangular, so the minimum dimension of the surface of the electrode sheet refers to a width of the electrode sheet. Under this dimensional relationship, the electrode sheet can smoothly pass through the interior of the induction coil, helping the induction coil to generate alternating magnetic induction lines parallel to the electrode sheet.

In some implementations, the electromagnetic induction heating unit includes an induction heating power supply, a resonant tank circuit module, and a cooling module, where the resonant tank circuit module includes an induction coil. The induction heating power supply is connected to the resonant tank circuit module, and the cooling module is connected to the resonant tank circuit module. Typically, in an induction circuit, a circuit including an inductor, a load, and a resonant capacitor is referred to as a resonant tank circuit. The inductor typically includes an induction coil. The inductor may further include a metal sleeve, and the induction coil may be wound on an outer surface of the metal sleeve or wound within a wall of the metal sleeve. The induction heating power supply provides power to the resonant tank circuit module, and the cooling module is configured to cool the resonant tank circuit module.

In some implementations, the electromagnetic induction heating unit further includes an operation console. The operation console refers to a control panel (including a panel and knobs for controlling parameters such as temperature, frequency, and power), which facilitates adjustment of the heating parameters of the electromagnetic induction unit.

In some implementations, the electrode sheet processing system further includes a temperature measurement unit, where the temperature measurement unit is configured to measure a temperature of the electrode sheet. By providing the temperature measurement unit, the temperature of the electrode sheet can be promptly and accurately monitored, enabling state monitoring of the electrode sheet. The temperature measurement unit may be configured to measure a surface temperature of the electrode sheet, an internal temperature of the electrode sheet, or both the surface temperature and the internal temperature of the electrode sheet.

In some implementations, the temperature measurement unit includes an infrared temperature measurement module. By virtue of infrared temperature measurement, non-contact temperature measurement of the electrode sheet can be achieved.

In some implementations, the electrode sheet processing system further includes an automatic temperature control unit, where the automatic temperature control unit is configured to control heating parameters (such as temperature, frequency, and current) of the electromagnetic induction heating unit. The automatic temperature control unit can receive temperature data of the electrode sheet measured by the temperature measurement unit to control the heating parameters of the electromagnetic induction heating unit based on this data. The automatic temperature control unit may include an automatic control module, where the automatic control module includes several components such as a temperature control component, a frequency control component, and a current control component, and a feedback mechanism of the automatic control module is that the heating parameters of the electromagnetic induction heating unit are automatically controlled based on the temperature of the electrode sheet measured by the temperature measurement unit. The automatic temperature control unit may be connected to other units in the electrode sheet processing system via a PLC (programmable logic controller).

For the electrode sheet, a slurry uniformly applied onto the current collector contains various binders, conductive agents, and other additives, where all the binders, conductive agents, and other additives may be polymers, and different polymers have different softening and decomposition temperatures. Therefore, more precise temperature control is needed to most effectively soften or decompose excess polymers (for example, excess floating binder) in the electrode sheet.

In the electrode sheet processing system of this embodiment of this application, by providing the automatic temperature control unit, the heating parameters of the electromagnetic induction heating unit can be controlled based on the temperature of the electrode sheet. When the temperature of the electrode sheet is too low, the heating power (or temperature, or current) of the electromagnetic induction heating unit can be controlled to increase, thereby raising the temperature of the electrode sheet; and when the temperature of the electrode sheet is too high, the heating power (or temperature, or current) of the electromagnetic induction heating unit can be controlled to decrease, thereby lowering the temperature of the electrode sheet. In some cases, a high-precision infrared temperature measurement module is used as a temperature measurement component of the temperature measurement unit, and under the control of a high-precision automatic control unit, precise control with a temperature accuracy within $\pm 3°C$ can be achieved. Therefore, the use of the automatic temperature control unit enables precise and flexible control of the temperature of the electrode sheet, maintaining the temperature of the electrode sheet within an appropriate range, thereby effectively softening and decomposing excess binder in the electrode sheet.

In some implementations, the electrode sheet processing system further includes a transport unit configured to transport the electrode sheet. Under the action of the transport unit, the electrode sheet sequentially enters the electromagnetic induction heating unit and other processes for processing, enabling continuous and uninterrupted operation. The transport unit may include an unwinding guide roller and a winding guide roller arranged in sequence, respectively configured to unwind and wind the electrode sheet. By placing the electrode sheet on the unwinding guide roller and the winding guide roller and operating the winding guide roller, the electrode sheet can move under the traction of the winding guide roller, and pass through an interior of an induction coil of the electromagnetic induction heating unit. An operating speed of the winding guide roller may be set to 10 m/min to 100 m/min, and optionally 40 m/min to 80 m/min. For example, the operating speed may include, but is not limited to, any one of 10 m/min, 15 m/min, 20 m/min, 25 m/min, 30 m/min, 35 m/min, 40 m/min, 45 m/min, 50 m/min, 55 m/min, 60 m/min, 65 m/min, 70 m/min, 75 m/min, 80 m/min, 85 m/min, 90 m/min, 95 m/min, and 100 m/min, or a range between any two thereof, or may be set to another operating speed according to actual needs. By adjusting the operating speed, the time and efficiency for processing the electrode sheet under the electromagnetic induction heating unit can be adjusted.

In some implementations, the electrode sheet processing system further includes a drying unit, where the drying unit is configured to perform drying treatment on an electrode sheet coated with an electrode slurry, and the drying unit and the electromagnetic induction heating unit are sequentially arranged in a transport direction of the electrode sheet. The electrode sheet coated with the electrode slurry refers to an electrode sheet in an intermediate state where no film is formed, which is formed by applying the electrode slurry onto a current collector (typically on one surface or both surfaces of the current collector), and at this point, the electrode slurry has not been dried and still contains solvent. The drying unit and the electromagnetic induction heating unit being sequentially arranged in the transport direction of the electrode sheet means that the electrode sheet passes through the drying unit first and then through the electromagnetic induction heating unit. After treatment by the drying unit, the solvent in the electrode slurry evaporates and becomes dry, while the binder in the electrode slurry migrates and floats to the surface of the electrode sheet along with the evaporation of the solvent. Subsequently, through treatment by the electromagnetic induction heating unit, the floating binder can be softened (melted) or ablated.

In some implementations, the electrode sheet processing system further includes a rolling unit, where the rolling unit is configured to perform rolling treatment on the electrode sheet, and the rolling unit and the electromagnetic induction heating unit are sequentially arranged in the transport direction of the electrode sheet. Alternatively, the drying unit, the rolling unit, and the electromagnetic induction heating unit are sequentially arranged in the transport direction of the electrode sheet. The rolling treatment typically includes cold rolling, hot rolling, and the like, and after rolling, the internal adhesion strength of the electrode sheet can be enhanced, and the electrode sheet can achieve the required compacted density.

In some implementations, the electrode sheet processing system further includes a blowing unit, where the blowing unit is configured to perform blowing treatment on the electrode sheet. The blowing unit and the electromagnetic induction heating unit are sequentially arranged in the transport direction of the electrode sheet. Performing blowing treatment on the electrode sheet before it enters the electromagnetic induction heating unit can remove impurities from the surface of the electrode sheet, optimizing the effect of the electromagnetic induction heating treatment.

In some implementations, the electrode sheet processing system further includes a cooling unit, where the cooling unit is configured to perform cooling treatment on the electrode sheet, and the electromagnetic induction heating unit and the cooling unit are sequentially arranged in the transport direction of the electrode sheet. After the electromagnetic induction heating unit processes the electrode sheet, the electrode sheet typically needs to be wound, and an excessively high temperature of the electrode sheet is not conducive to winding. Therefore, cooling the electrode sheet through the cooling unit can lower the temperature of the electrode sheet, facilitating subsequent winding of the electrode sheet.

According to a second aspect, an embodiment of this application provides a method for processing an electrode sheet, where the electrode sheet includes a current collector and an active layer, the active layer is disposed on at least one side of the current collector, the active layer includes a binder, and the method for processing an electrode sheet includes: performing electromagnetic induction heating treatment on the electrode sheet, making a surface temperature of the active layer greater than or equal to a softening temperature or a melting temperature of the binder, and making a temperature of the current collector less than a deformation temperature of the current collector.

In the electrode sheet, the current collector on the electrode sheet serves as a substrate for attachment of the active layer and conducts electrons during battery chemical reactions. The binder is a polymer compound used to bind various components in the active layer (for example, an active material and other substances) and the current collector, primarily serving to bond the active material and maintain the stability of the active material in the active layer, enhance contact between the active layer and the current collector, and enhance contact among the substances in the active layer. The binder is mixed with the active material, a solvent, and other necessary components to form a slurry, and the slurry is applied onto at least one side of the current collector. After the solvent evaporates, the slurry becomes dry, forming the active layer. During the drying process, the evaporation of the solvent causes the binder to easily migrate to the surface of the active layer, leading to binder flotation, which affects the electrochemical performance of the electrode sheet.

The surface of the active layer refers to an outermost layer of the active layer in contact with the external environment. Typically, the electrode sheet includes a current collector and an active layer disposed on at least one side of the current collector, so the surface of the active layer is usually the surface of the electrode sheet. Generally, a region within 40% of the thickness of the electrode sheet, from the outside inward along a thickness direction of the electrode sheet, can be considered as the surface of the electrode sheet.

The softening temperature is a temperature at which a three-dimensional long-range ordered state of a macromolecular chain structure of an amorphous polymer transitions to a disordered viscous flow state. The melting temperature is a temperature at which a three-dimensional long-range ordered state of the macromolecular chain structure of a crystalline polymer transitions to a disordered viscous flow state, also known as the melting point, which is the lower limit of a processing temperature for crystalline polymers. Generally, the melting temperature range is relatively narrow, while the softening temperature range is relatively wide. The decomposition temperature refers to a temperature at which, when the polymer in a viscous flow state is further heated, the composition of the molecular chain intensifies, or even the polymer molecular chain undergoes significant decomposition. The deformation temperature refers to a temperature at which a material can deform (including but not limited to elongation, shortening, and bending) when heated.

In the method of this embodiment of this application, electromagnetic induction heating treatment is performed on the electrode sheet, the active layer typically contains a conductive agent, and the conductive agent in the active layer generates heat upon electromagnetic induction, thereby achieving electromagnetic induction heating of the active layer. During the electromagnetic induction heating, the surface temperature of the active layer is made greater than or equal to the softening temperature or melting temperature of the binder. At this temperature, the binder that floats to the surface of the active layer during the drying process of the electrode sheet is softened or melted, or is even ablated. By softening (melting) or ablating, the floating binder on the active layer surface can be reduced, and the ablated binder leaves pores in the active layer, increasing the porosity of the electrode sheet, and thus increasing the electrolyte infiltration rate; in addition, softening (melting) or ablating the binder can also reduce various burrs and particles at edges of the active layer, so that the surface of the active layer is smoother, reducing the surface sharpness of the electrode sheet, thereby reducing the risk of the electrode sheet piercing a separator, which is conducive to improving direct current resistance (DCR), K value (voltage drop), and self-discharge of the battery. In addition, the conductive agent contained in the active layer is influenced by magnetic field lines generated during the electromagnetic induction process, aligning in a consistent direction, which is conducive to further reducing the sheet resistance of the electrode sheet.

Additionally, after the electromagnetic induction heating treatment, the temperature of the current collector is less than the deformation temperature of the current collector, thereby mitigating softening or deformation of the current collector due to high temperatures, maintaining good adhesion and conductivity between the current collector and the active layer, helping to reduce the sheet resistance of the electrode sheet, and mitigating issues such as electrode sheet burnout or powder shedding.

In some implementations, the active layer further includes an active material, and the surface temperature of the active layer is less than the lowest of a decomposition temperature, an oxidation temperature, and an ignition temperature of the active material. Keeping the treatment temperature below the lowest of the decomposition temperature, oxidation temperature, and ignition temperature of the active material prevents the active material from being etched, decomposed, oxidized, or ignited, enabling the active material in the electrode sheet to maintain crystal lattice integrity and improving the capacity of the electrode sheet. Typically, the decomposition temperature, oxidation temperature, and ignition temperature of the active material are very high. During the electromagnetic induction heating process, under the condition that the temperature of the current collector is less than the deformation temperature of the current collector, the surface temperature of the active layer is also less than the lowest of the decomposition temperature, oxidation temperature, and ignition temperature of the active material.

In some implementations, the electromagnetic induction heating treatment step includes: making the electrode sheet pass through an interior of an induction coil and applying an alternating current to the induction coil.

The alternating current, that is, AC, refers to a current whose direction changes periodically with time.

In this embodiment of this application, by making the electrode sheet pass through the interior of the induction coil, an alternating magnetic field is generated after an alternating current passes through the induction coil, enabling the induction coil to generate alternating magnetic induction lines parallel to the electrode sheet, thereby generating an induced alternating current at a corresponding frequency in the electrode sheet. When the induced alternating current passes through the electrode sheet, the alternating current tends to flow along the surface of the electrode sheet, with a higher current density at the surface of the electrode sheet and a lower current density inside the electrode sheet, where the current is primarily concentrated at the surface of the electrode sheet, and at a position closer to the surface, the current density is higher, producing a "skin effect". This skin effect enables rapid heating of the surface of the electrode sheet, quickly raising the surface temperature of the electrode sheet, so that the floating binder, edge burrs, and edge particles can be ablated. In addition, since the current density inside the electrode sheet is lower, the issue of softening or deformation of the current collector inside the electrode sheet due to high temperatures can be mitigated, thereby enhancing the adhesion strength between the active layer and the current collector of the electrode sheet.

Moreover, the electrode sheet passes through the interior of the induction coil, and only one set of induction coil is present in the space above and below the electrode sheet, reducing spatial bulkiness and increasing the safety coefficient.

In some implementations, an induction frequency of the electromagnetic induction heating treatment is greater than or equal to 5 kHz; in some implementations, the induction frequency of the electromagnetic induction heating treatment is 10 kHz to 50 kHz; and in some implementations, the induction frequency of the electromagnetic induction heating treatment is 10 kHz to 20 kHz. For example, the induction frequency of the electromagnetic induction heating treatment may include, but is not limited to, any one of 5 kHz, 10 kHz, 15 kHz, 20 kHz, 25 kHz, 30 kHz, 35 kHz, 40 kHz, 45 kHz, and 50 kHz, or a range between any two thereof. The induction frequency of the electromagnetic induction heating treatment may typically be directly set in an electromagnetic induction heating apparatus. The induction frequency of the electromagnetic induction heating treatment may be regarded as an output frequency after an alternating current is applied to the induction coil, where an alternating magnetic field is generated after the alternating current passes through the induction coil, and the alternating magnetic field generates an induced alternating current at a corresponding frequency in the electrode sheet. The induction frequency of the electromagnetic induction heating treatment affects the depth of action on the electrode sheet. At the induction frequency mentioned in this embodiment of this application, the active layer of the electrode sheet can be inductively heated with a small heating effect on the current collector inside the electrode sheet, which is conducive to maintaining the adhesion and conductivity between the current collector and the active layer. The active layer is tightly bonded with the current collector, which is conducive to stability during charge-discharge cycles (the active layer is less likely to be detached from the current collector) and also improves kinetic performance.

In some implementations, a waveform of the alternating current includes one or more of a sine wave, a triangular wave, and a square wave. In this embodiment of this application, various waveforms of alternating current can be applied to the induction coil to achieve electromagnetic induction heating for the electrode sheet.

In some implementations, the number of turns of the induction coil is 2 to 10; and in some implementations, the number of turns of the induction coil is 2 to 5. For example, the number of turns of the induction coil may include, but is not limited to, any one of 2, 3, 4, 5, 6, 7, 8, 9, and 10, or a range between any two thereof. The number of turns of the induction coil is an important factor affecting its performance. Generally, with the same current magnitude, a larger number of the turns results in a stronger induced magnetic field generated by the induction coil. Using an appropriate number of turns for the induction coil can not only meet the induction strength requirements but also reduce equipment costs and reduce resource waste.

In some implementations, a shape of the induction coil includes, but is not limited to, a circular shape, a square shape, a rectangular shape, or other shapes.

In some implementations, a maximum dimension of a cross section of the induction coil in a direction perpendicular to the electrode sheet is greater than or equal to a minimum dimension of the surface of the electrode sheet. The minimum dimension of the surface of the electrode sheet refers to the shortest distance on the surface of the electrode sheet. The electrode sheet is typically rectangular, so the minimum dimension of the surface of the electrode sheet refers to a width of the electrode sheet. Under this dimensional relationship, the electrode sheet can smoothly pass through the interior of the induction coil.

In some implementations, the electrode sheet moves relative to the induction coil. The moving speed may be flexibly set as needed. For example, the moving speed of the electrode sheet relative to the induction coil is 10 m/min to 100 m/min, optionally 40 m/min to 80 m/min. For example, the moving speed may include, but is not limited to, any one of 10 m/min, 15 m/min, 20 m/min, 25 m/min, 30 m/min, 35 m/min, 40 m/min, 45 m/min, 50 m/min, 55 m/min, 60 m/min, 65 m/min, 70 m/min, 75 m/min, 80 m/min, 85 m/min, 90 m/min, 95 m/min, and 100 m/min, or a range between any two thereof. The electrode sheet can be placed on an unwinding guide roller and a winding guide roller and is pulled using the winding guide roller, so that the electrode sheet moves relative to the induction coil. By controlling a rotating speed of the unwinding guide roller and the winding guide roller, the moving speed of the electrode sheet relative to the induction coil can be adjusted. By controlling the movement of the electrode sheet relative to the induction coil, a time for processing the electrode sheet under the electromagnetic induction heating unit can be adjusted, thereby adjusting the temperature of the electrode sheet; moreover, batch processing of electrode sheets can be performed, improving processing efficiency.

In some implementations, the surface temperature of the active layer is 100°C to 450°C; and in some embodiments, the surface temperature of the active layer is 220°C to 400°C. For example, the surface temperature of the active layer may include, but is not limited to, any one of 100°C, 120°C, 140°C, 160°C, 180°C, 200°C, 220°C, 240°C, 260°C, 280°C, 300°C, 320°C, 340°C, 360°C, 380°C, 400°C, 420°C, and 450°C, or a range between any two thereof. The surface temperature of the active layer can be measured by an infrared temperature measurement module or other temperature testing instruments. When the surface of the active layer reaches these temperature ranges, the binder on the surface of the electrode sheet can be softened (melted) or even ablated, and after the heat is transferred to the internal current collector, temperature of the current collector is less than a deformation temperature of the current collector.

In some implementations, before the electromagnetic induction heating treatment, a thickness of the electrode sheet is 50 $\mu$m to 300 $\mu$m; and in some implementations, before the electromagnetic induction heating treatment, the thickness of the electrode sheet is 50 $\mu$m to 200 $\mu$m. For example, the thickness of the electrode sheet may include, but is not limited to, any one of 50 $\mu$m, 60 $\mu$m, 70 $\mu$m, 80 $\mu$m, 90 $\mu$m, 100 $\mu$m, 150 $\mu$m, 200 $\mu$m, 250 $\mu$m, and 300 $\mu$m, or a range between any two thereof. Typically, the thickness of the electrode sheet may be measured using a micrometer, a laser thickness gauge, a thickness scanning gauge, or the like. The frequency and power of the alternating current applied to the induction coil as well as the induction frequency of the electromagnetic induction heating treatment affect the depth of action on the electrode sheet. The method of this embodiment of this application can process electrode sheets of different thicknesses, and electromagnetic induction conditions such as alternating current frequency, power, and induction frequency may be flexibly adjusted to perform induction heating treatment on the active layers in electrode sheets of different thicknesses without affecting the internal current collectors of the electrode sheets.

In some implementations, before the electromagnetic induction heating treatment, an areal density of the active layer is 0.05 mg/mm$^2$ to 0.6 mg/mm$^2$; and in some embodiments, before the electromagnetic induction heating treatment, the areal density of the active layer is 0.1 mg/mm$^2$ to 0.5 mg/mm$^2$. For example, the areal density of the active layer may include, but is not limited to, any one of 0.05 mg/mm$^2$, 0.1 mg/mm$^2$, 0.15 mg/mm$^2$, 0.2 mg/mm$^2$, 0.25 mg/mm$^2$, 0.3 mg/mm$^2$, 0.35 mg/mm$^2$, 0.4 mg/mm$^2$, 0.45 mg/mm$^2$, 0.5 mg/mm$^2$, 0.55 mg/mm$^2$, and 0.6 mg/mm$^2$, or a range between any two thereof. The areal density refers to a mass of an electrode sheet coating per unit area, which may be measured using an X/β-ray areal density meter. The areal density primarily affects the internal resistance and capacity of the electrode sheet. Typically, within a certain range, the internal resistance of the electrode sheet decreases as the areal density increases, and increasing the areal density of the electrode sheet helps to reduce the internal resistance of the electrode sheet, thereby improving the capacity of the electrode sheet. The active layer in this embodiment of this application has an appropriate areal density, and the electrode sheet has low internal resistance and high capacity.

In some implementations, the binder includes one or more of an oil-soluble binder, a water-soluble binder, and an emulsion-type binder.

In some implementations, the oil-soluble binder includes one or more of polyvinylidene fluoride, polyimide, polytetrafluoroethylene, polybutyl acrylate, and polyacrylonitrile.

In some implementations, the water-soluble binder includes one or more of carboxymethyl cellulose, carboxymethyl cellulose salt, polyacrylic acid, polyacrylate, polyvinyl alcohol, sodium alginate, and cyclodextrin.

In some implementations, the emulsion-type binder includes one or more of styrene-butadiene rubber, vinyl acetate resin, acrylic resin, and chlorinated rubber.

Depending on different types of active materials in the electrode sheet, different binders may be selected, and an appropriate processing temperature may be determined based on the softening temperature, melting temperature, or decomposition temperature of the binder. For example, when polyvinylidene fluoride (PVDF) or polyimide (PI) is selected as the binder, the surface temperature of the active layer during the electromagnetic induction heating treatment may be set to 160°C to 400°C, more specifically 300°C to 400°C, including but not limited to any one of 160°C, 180°C, 200°C, 220°C, 240°C, 260°C, 280°C, 300°C, 320°C, 340°C, 360°C, 380°C, and 400°C, or a range between any two thereof. For another example, when styrene-butadiene rubber is selected as the binder, the surface temperature of the active layer during the electromagnetic induction heating treatment may be set to 180°C to 350°C, more specifically 250°C to 300°C, including but not limited to any one of 180°C, 200°C, 220°C, 240°C, 250°C, 260°C, 280°C, 300°C, 320°C, 340°C, and 350°C, or a range between any two thereof.

In some implementations, a mass percentage of the binder in the active layer includes, but is not limited to, 0.5% to 10%, for example, 1% to 5%, such as any one of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, and 10%, or a range between any two thereof, or another value set as needed.

In some implementations, the electrode sheet includes one or both of a positive electrode sheet and a negative electrode sheet. Both positive and negative electrode sheets experience binder flotation during the drying process, and the method of this embodiment of this application is applicable to both positive and negative electrode sheets.

In some implementations, the electrode sheet is a positive electrode sheet, and the active material includes one or more of a metallic inorganic active material and an organic active material.

In some implementations, the metallic inorganic active material includes one or more of lithium iron phosphate, lithium manganese iron phosphate, lithium cobalt oxide, lithium manganese oxide, lithium nickel cobalt manganese oxide, and lithium nickel cobalt aluminate.

In some implementations, the organic active material includes one or more of quinone compounds, carboxylate compounds, anhydride compounds, and amide compounds.

In some implementations, the electrode sheet is a negative electrode sheet, and the active material includes one or more of a carbon-based active material, a titanium-based active material, a silicon-based active material, a nitride, and metallic lithium.

In some implementations, the carbon-based material includes one or more of graphite, hard carbon, soft carbon, mesocarbon microbeads, and graphene.

In some implementations, the titanium-based active material includes one or more of lithium titanate and titanium dioxide.

In some implementations, the silicon-based active material includes one or more of silicon and silicon dioxide.

In some implementations, the nitride includes lithium nitride.

In some implementations, a mass percentage of the active material in the active layer includes, but is not limited to, 90% to 98%, for example, 95% to 98%, such as any one of 90%, 91%, 92%, 93%, 94%, 95%, 96%, 97%, and 98%, or a range between any two thereof, or another value set as needed.

In some implementations, the active layer further includes a conductive agent. The conductive agent is configured to collect micro-currents between active materials and between the active material and the current collector, increasing electronic conductivity. In addition, the conductive agent can also facilitate infiltration of the electrolyte to the positive electrode sheet. The conductive agent is influenced by magnetic field lines generated during the electromagnetic induction process, aligning in a consistent direction, which is conducive to further reducing the sheet resistance of the electrode sheet.

In some implementations, the conductive agent includes one or more of acetylene black (SP), carbon nanotubes, conductive carbon black (super-P), Ketjen black, carbon fiber, and graphene. The conductive agent is influenced by magnetic field lines generated during the electromagnetic induction process, aligning in a consistent direction, which is conducive to further reducing the sheet resistance of the electrode sheet.

In some implementations, a mass percentage of the conductive agent in the active layer includes, but is not limited to, 0.5% to 10%, for example, 1% to 5%, such as any one of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, and 10%, or a range between any two thereof, or another value set as needed.

In some embodiments, the current collector includes, but is not limited to, a metallic current collector, a carbon current collector, a conductive resin current collector, and a metal and resin composite current collector, more specifically, for example, copper, nickel, titanium, iron, respective alloys thereof, stainless steel, carbon fiber, carbon nanotubes (CNT), and graphite. During the electromagnetic induction heating process, due to the skin effect and the control for the electromagnetic induction heating conditions, the current collector is minimally or not affected by electromagnetic induction, with minimal temperature changes, enabling the current collector to maintain good adhesion and conductivity with the active layer.

In some implementations, the active layer further optionally includes a thickener, such as carboxymethyl cellulose (CMC). A mass percentage of the thickener in the active layer includes, but is not limited to, 0.5% to 5%, for example, 1% to 5%, including but not limited to any one of 0.5%, 1%, 1.5%, 2%, 2.5%, 3%, 3.5%, 4%, 4.5%, and 5%, or a range between any two thereof, or another value set as needed.

In some implementations, before the electromagnetic induction heating treatment step, a step of performing drying treatment on the active layer is included. In a preparation process of the electrode sheet, the active material is generally mixed with the binder, conductive agent, solvent, and other necessary components to form a slurry, and the slurry is applied onto the current collector and dried to form the active layer. Typically, after the drying treatment, a forming treatment step such as a cold rolling treatment for the electrode sheet is included. During the drying process, the solvent evaporates, and the binder migrates to the surface of the active layer, leading to binder flotation, which causes various issues detrimental to the electrochemical performance of the electrode sheet. In the method of this embodiment of this application, electromagnetic induction heating treatment is performed on the electrode sheet after the drying treatment, which can address the issue of binder flotation during the drying process and improve the electrochemical performance of the electrode sheet.

In some implementations, before the electromagnetic induction heating treatment step, a step of performing rolling treatment on the electrode sheet is included. The rolling treatment typically includes cold rolling, hot rolling, and the like, and after rolling, the internal adhesion strength of the electrode sheet can be enhanced, and the electrode sheet can achieve the required compacted density. The rolling treatment step may be arranged after the drying treatment step and before the electromagnetic induction heating treatment step.

In some implementations, after the electromagnetic induction heating treatment step, a step of performing cooling treatment on the electrode sheet is included. The cooling treatment methods include, but are not limited to, air cooling and circulating water cooling. After the electromagnetic induction heating unit processes the electrode sheet, the electrode sheet typically needs to be wound, and an excessively high temperature of the electrode sheet is not conducive to winding. Therefore, cooling the electrode sheet through a cooling unit can lower the temperature of the electrode sheet, facilitating subsequent winding of the electrode sheet.

According to a third aspect, an embodiment of this application provides an electrode sheet, where the electrode sheet is obtained by processing performed using the above method.

In the electrode sheet obtained by processing performed using the above method, the floating binder is softened (melted) or ablated, thereby reducing the floating binder. In addition, the softened (melted) or ablated binder leaves pores in the active layer, increasing the porosity of the electrode sheet, and thus increasing the electrolyte infiltration rate; and various burrs and particles at the edges of the electrode sheet are reduced, so that the surface of the electrode sheet is smoother, reducing the sharpness, thereby reducing the risk of the electrode sheet piercing a separator. Additionally, the conductive agent in the active layer is influenced by magnetic field lines generated during the electromagnetic induction process, aligning in a consistent direction, which is conducive to further reducing the sheet resistance of the electrode sheet. These properties are all conducive to improving the DCR, K value, and self-discharge of the battery.

In some implementations, after a 0.3 mm capillary is used to suck a 3 mm height of electrolyte and make vertical contact with the electrode sheet of this embodiment of this application, the electrode sheet is made to absorb the electrolyte, where a time for the electrode sheet to completely absorb the electrolyte is less than 20s, optionally 3s to 15s, including but not limited to any one of 1s, 2s, 3s, 4s, 5s, 6s, 7s, 8s, 9s, 10s, 11s, 12s, 13s, 14s, 15s, 16s, 17s, 18s, 19s, and 19.8s, or a range between any two thereof. Alternatively, after a 0.3 mm capillary is used to absorb a 3 mm height of electrolyte and make vertical contact with the electrode sheet of the embodiments of this application, the electrode sheet is made to absorb the electrolyte, where a time for the electrode sheet to completely absorb the electrolyte is reduced by 15% or more compared to that before the electromagnetic induction heating treatment, optionally reduced by 45% or more, optionally reduced by 45% to 90%, and further optionally reduced by 47% to 87%, including but not limited to any one of 15%, 20%, 25%, 30%, 35%, 40%, 45%, 47%, 50%, 55%, 60%, 65%, 70%, 75%, 80%, 85%, 87%, and 90%, or a range between any two thereof. The electrode sheet of this embodiment of this application has high porosity, enabling a high absorption rate for the electrolyte and a short absorption time.

In some implementations, the electrode sheet of this embodiment of this application has a sheet resistance reduced by 20% or more compared to that before the electromagnetic induction heating treatment, optionally reduced by 20% to 60%, including but not limited to any one of 20%, 25%, 30%, 35%, 40%, 45%, 50%, 55%, and 60%, or a range between any two thereof. After the electromagnetic induction heating treatment, the conductive agent in the active layer is influenced by magnetic field lines generated during the electromagnetic induction process, aligning in a consistent direction, which is conducive to further reducing the sheet resistance of the electrode sheet.

In some implementations, the electrode sheet of this embodiment of this application has a K value reduced compared to that before the electromagnetic induction heating treatment, optionally, the K value of the electrode sheet is reduced by 5% or more compared to that before the electromagnetic induction heating treatment; and optionally, reduced by 10% or more, including but not limited to any one of 5%, 15%, 20%, 25%, and 30%, or a range between any two thereof. The K value is a voltage drop per unit time of the battery, indicating the self-discharge performance of the battery. After the electromagnetic induction heating treatment, the electrode sheet of this embodiment of this application has an increased electrolyte infiltration rate, reduced sheet resistance, and a smoother surface, thereby reducing the risk of the electrode sheet piercing a separator, ultimately reducing the K value of the battery and improving the self-discharge performance of the battery.

According to a fourth aspect, an embodiment of this application provides a battery, where the battery includes the above electrode sheet.

The battery of this embodiment of this application includes the above electrode sheet, where the electrode sheet may be a positive electrode sheet, a negative electrode sheet, or may include both a positive electrode sheet and a negative electrode sheet. Since the floating binder in the electrode sheet of the battery is softened (melted) or ablated, the floating binder is reduced. The electrode sheet has increased porosity due to the softening (melting) or ablation of the binder, which is conducive to increasing the electrolyte infiltration rate; and various burrs and particles at the edges of the electrode sheet are reduced, so that the surface of the electrode sheet is smoother, reducing the sharpness, thereby reducing the risk of the electrode sheet piercing a separator, which is conducive to improving the DCR, K value, and self-discharge of the battery. Additionally, the conductive agent in the active layer is influenced by magnetic field lines generated during the electromagnetic induction process, aligning in a consistent direction, which is conducive to further reducing the sheet resistance of the electrode sheet. Therefore, the battery including the above electrode sheet exhibits better DCR, K value, and self-discharge performance.

In some implementations, the battery of this embodiment of this application includes one or more of a primary battery and a secondary battery. Depending on whether the battery can be recharged for reuse, batteries can be classified into primary batteries and secondary batteries. Primary batteries cannot be recharged to restore after discharge, while secondary batteries can be recharged to activate the active material for continued use after discharge. The electrode sheet of this embodiment of this application can be applied to both primary batteries and secondary batteries, offering a wide range of applications.

In some implementations, the battery of this embodiment of this application includes one or more of a battery cell, a battery module, and a battery pack. Under a condition that the battery is a secondary battery, depending on the packaging form, the secondary battery include a battery cell, a battery module, and a battery pack. A battery cell is the most basic unit of a secondary battery, including an electrode assembly and an electrolyte, where the electrode assembly typically includes a positive electrode sheet, a negative electrode sheet, and a separator. The battery cell primarily operates by the movement of metal ions in the electrolyte between the positive electrode sheet and the negative electrode sheet. In some battery packaging technologies, one or more battery cells may be first integrated into a battery module, and then one or more battery modules are installed in a battery box to form a battery pack. In other battery packaging technologies, one or more battery cells may be directly installed in a box to form a battery pack, eliminating the intermediate state of a battery module, thereby reducing the weight of the battery pack and increasing the energy density of the battery.

In some implementations, the battery further includes an electrolyte. The electrolyte can serve as a carrier for ion transport in the battery.

In some implementations, the electrolyte may be a liquid electrolyte, and the liquid electrolyte may include a solvent and a lithium salt dissolved in the solvent. The electrolyte may also include a solid electrolyte, such as a polymer electrolyte or an inorganic solid electrolyte, but is not limited thereto.

The solvent in the liquid electrolyte may be a non-aqueous organic solvent, such as one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB).

The lithium salt may be one or more of $LiPF_6$ (lithium hexafluorophosphate), $LiBF_4$ (lithium tetrafluoroborate), $LiClO_4$ (lithium perchlorate), $LiAsF_6$ (lithium hexafluoroarsenate), LiFSI (lithium bis(fluorosulfonyl)imide), LiTFSI (lithium bis(trifluoromethanesulfonyl)imide), LiTFS (lithium trifluoromethanesulfonate), LiDFOB (lithium difluoro(oxalato)borate), LiBOB (lithium bis(oxalato)borate), $LiPO_2F_2$ (lithium difluorophosphate), LiDFOP (lithium difluoro(oxalato)phosphate), and LiTFOP (lithium tetrafluoro(oxalato)phosphate), for example, one or more of LiPF6 (lithium hexafluorophosphate), $LiBF_4$ (lithium tetrafluoroborate), LiBOB (lithium bis(oxalato)borate), LiDFOB (lithium difluoro(oxalato)borate), LiTFSI (lithium bis(trifluoromethanesulfonyl)imide), and LiFSI (lithium bis(fluorosulfonyl)imide).

The liquid electrolyte further optionally includes another additive, such as one or more of vinylene carbonate (VC), vinyl ethylene carbonate (VEC), fluoroethylene carbonate (FEC), difluoroethylene carbonate (DFEC), trifluoromethyl ethylene carbonate (TFPC), succinonitrile (SN), adiponitrile (ADN), glutaronitrile (GLN), hexanetricarbonitrile (HTN), 1,3-propane sultone (1,3-PS), ethylene sulfate (DTD), methylene methanedisulfonate (MMDS), 1-propene-1,3-sultone (PST), 4-methyl ethylene sulfate (PCS), 4-ethyl ethylene sulfate (PES), 4-propyl ethylene sulfate (PEGLST), propylene sulfate (TS), 1,4-butane sultone (1,4-BS), ethylene sulfite (DTO), dimethyl sulfite (DMS), diethyl sulfite (DES), cyclic quaternary ammonium sulfonate, tris(trimethylsilyl) phosphate (TMSP), and tris(trimethylsilyl) borate (TMSB), but is not limited thereto.

In some implementations, the battery further includes a separator disposed between the positive electrode sheet and the negative electrode sheet. In some batteries, a separator is needed to be provided to isolate the positive electrode sheet from the negative electrode sheet, preventing electrons from freely passing within the battery and avoiding short-circuiting between the two electrodes, as well as allowing ions in the electrolyte to pass freely between the positive and negative electrodes.

The separator may be any known porous structure separator with electrochemical and mechanical stability, such as a single-layer or multi-layer film of one or more of glass fiber, non-woven fabric, polyethylene (PE), polypropylene (PP), and polyvinylidene fluoride (PVDF).

The positive electrode sheet and the negative electrode sheet are alternately stacked, and a separator is disposed between the positive electrode sheet and the negative electrode sheet to provide isolation, forming a bare cell, or a bare cell may be obtained by winding. The cell is placed in a housing, an electrolyte is injected into the housing, and the housing is sealed to obtain a battery cell. A plurality of battery cells are first integrated to form a battery module, and the battery module can provide higher voltage and capacity with specific functional outputs; and then, the battery module is installed in a battery box, typically with the addition of a battery management system, to form a battery pack, and the battery pack is usually a product provided for users. Alternatively, a plurality of battery cells may be directly installed in a box to form a battery pack.

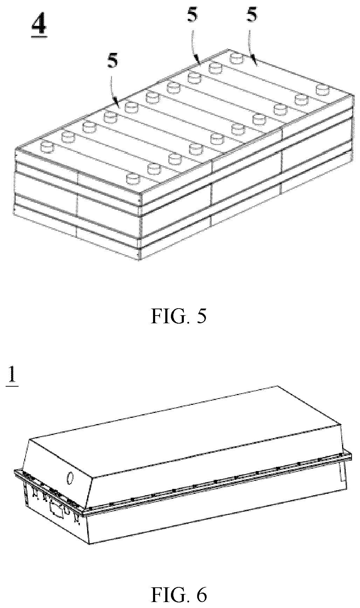

FIG. 5 shows a battery module 4 as an example. In the battery module 4, a plurality of battery cells 5 may be sequentially arranged along a length direction of the battery module 4. Certainly, the battery cells 5 may alternatively be arranged in any other manner. Further, the plurality of battery cells 5 may be fastened through fasteners.

Optionally, the battery module 4 may further include a housing with an accommodating space, and the plurality of battery cells 5 are accommodated in the accommodating space.

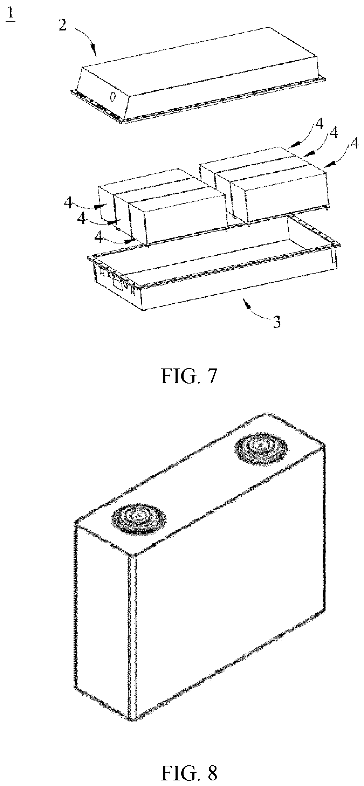

FIG. 6 and FIG. 7 show battery pack 1 as an example. The battery pack 1 may include a battery box and a plurality of battery modules 4 arranged in the battery box. The battery box includes an upper box body 2 and a lower box body 3, where the upper box body 2 can cover the lower box body 3, forming a closed space for accommodating the battery modules 4. The plurality of battery modules 4 may be arranged in the battery box in any manner.

In some implementations, the battery may include an outer package. The outer package may be used to encapsulate an electrode assembly formed by the positive electrode sheet, the negative electrode sheet, and the separator, as well as the electrolyte.

The outer package of the battery may be a hard shell, such as a hard plastic shell, an aluminum shell, or a steel shell; or it may be a soft package, such as a pouch-type soft package. The material of the soft package may be plastic, such as polypropylene, polybutylene terephthalate, and polybutylene succinate.

The shape of the battery may be cylindrical, prismatic, or any other shape. For example, FIG. 8 shows a battery of a prismatic structure as an example.

In some implementations, referring to FIG. 9, the outer package may include a shell 51 and a cover plate 53. The shell 51 may include a base plate and a side plate connected to the base plate, where the base plate and the side plate enclose an accommodating cavity. The shell 51 has an opening communicating with the accommodating cavity, and the cover plate 53 can cover the opening to enclose the accommodating cavity. A positive electrode sheet, a negative electrode sheet, and a separator may be formed into an electrode assembly 52 through a winding process or a lamination process. One or more electrode assemblies 52 are encapsulated in the accommodating cavity, and an electrolyte infiltrates into the electrode assembly 52.

An embodiment of this application further provides an electric apparatus, where the electric apparatus includes the above battery.

The battery disclosed in the embodiments of this application can be used in an electric apparatus using a battery as a power source or in various energy storage systems using a battery as an energy storage element to provide electrical energy. The electric apparatus may include, but is not limited to, mobile phones, tablets, laptops, electric toys, electric tools, electric bicycles, electric vehicles, ships, and spacecraft. The Electric toys may include fixed or mobile electric toys, such as game consoles, electric toy cars, electric toy ships, and electric toy airplanes, while the spacecraft may include airplanes, rockets, space shuttles, and spaceships, and the like. A battery cell, a battery module, or a battery pack in a battery can be selected based on the use requirements of the electric apparatus.

FIG. 10 shows an electric apparatus as an example. The electric apparatus is a pure electric vehicle, a hybrid electric vehicle, or a plug-in hybrid electric vehicle, or the like. To meet the high power and high energy density requirements of the electric apparatus for the battery, a battery pack or battery module may be used.

The following description is provided in conjunction with specific examples.

Example 1

An electrode sheet processing system was provided in this example. Referring to FIG. 2, an electrode sheet processing system included: a drying unit (which is not shown in FIG. 2) configured to perform drying treatment on an electrode sheet 10; an electromagnetic induction heating unit 20 configured to perform electromagnetic induction heating treatment on the electrode sheet 10; and a transport unit 30 configured to transport the electrode sheet 10, where the transport unit 30 included an unwinding guide roller 31 and a winding guide roller 32. The drying unit and the electromagnetic induction heating unit 20 were sequentially arranged in a transport direction of the electrode sheet 10 (direction D in FIG. 2).

The electromagnetic induction heating unit 20 included an induction heating power supply (not shown in FIG. 2), a resonant tank circuit module (not shown in FIG. 2), and a cooling unit (not shown in FIG. 2), where the resonant tank circuit module included a metal sleeve 21 and an induction coil 22 wound on an outer wall surface of the metal sleeve 21; the induction coil 22 had 3 turns; and the electrode sheet 10 passed through an interior of the induction coil 22. The induction heating power supply was connected to the resonant tank circuit module to provide electrical energy to the resonant tank circuit module; and the cooling unit was connected to the resonant tank circuit module to cool the resonant tank circuit module.

In this example, the electrode sheet processing system further included a temperature measurement unit 40 configured to measure a temperature of the electrode sheet 10. The temperature measurement unit 40 in this example included an infrared temperature measurement module, enabling non-contact temperature measurement of the electrode sheet 10 through infrared temperature measurement.

In this example, the electrode sheet processing system further included an automatic temperature control unit (not shown in FIG. 2), where the automatic temperature control unit was configured to control a heating power of the electromagnetic induction heating unit 20 based on the temperature of the electrode sheet 10 measured by the temperature measurement unit 40.

In this example, the electrode sheet processing system further included a blowing unit 50, where the blowing unit 50 is configured to perform blowing treatment on the electrode sheet 10 before the electrode sheet 10 entered the electromagnetic induction heating unit 20, to remove impurities from the surface of the electrode sheet 10.

A workflow of the electrode sheet processing system in this example was as follows.

An electrode slurry was applied onto a current collector, and dried by the drying unit (optionally followed by a cold rolling process after drying) to form an electrode sheet 10 with a dried active layer. The electrode sheet 10 was transported by the transport unit 30 and then passed through the interior of the induction coil 22 in the electromagnetic induction heating unit 20. An alternating current was applied to the induction coil 22 through the induction heating power supply, thereby performing electromagnetic induction heating treatment on the electrode sheet 10. During the electromagnetic induction heating process, the temperature measurement unit 40 monitored the temperature of the electrode sheet 10 in real time; in addition, the automatic temperature control unit received temperature data of the electrode sheet 10 measured by the temperature measurement unit 40 and adjusted the heating power of the electromagnetic induction heating unit 20 for the electrode sheet 10 based on this data, maintaining the temperature of the electrode sheet 10 within a desired temperature range.

Example 2

A method for processing a negative electrode sheet was provided in this example, specifically for processing the negative electrode sheet in the electrode sheet processing system of Example 1.

The negative electrode sheet in this example was a graphite electrode sheet, and a preparation method thereof included: 95wt% of artificial graphite as a negative active material, 1.0wt% of conductive carbon black, 2.0wt% of styrene-butadiene rubber SBR, and 2.0wt% of sodium carboxymethyl cellulose CMC were mixed, added with deionized water, stirred, and dispersed to form a negative electrode slurry. Then, the negative electrode slurry was then applied onto a Cu foil, and after both sides were coated, the Cu foil was dried at 90°C to 110°C and cold-rolled to obtain a dried negative electrode sheet with a total CW of 160 mg/1540.25 mm$^2$, a thickness of 70 $\mu$m, and a coating width of 105 mm, where the dried negative electrode slurry formed an active layer of the negative electrode sheet.

The method for processing a negative electrode sheet in this example included:

(1) the cold-rolled negative electrode sheet was placed on the unwinding guide roller 31 and the winding guide roller 32 of the electrode sheet processing system as described in Example 1 shown in FIG. 2, and the negative electrode sheet was made to pass through the interior of the induction coil 22; and

(2) a speed of the winding guide roller 32 was set to 80 m/min, where the negative electrode sheet passed through the induction coil under the traction of the winding guide roller 32; and an alternating current was applied to the induction coil to start electromagnetic induction heating treatment on the negative electrode sheet, with an induction frequency of the electromagnetic induction heating treatment being 15 kHz. During the electromagnetic induction heating process, an automatic temperature control unit of the electrode sheet processing system was used to control a static temperature to be monitored at 450°C (by controlling a current knob), with the power remaining constant thereafter. The static temperature referred to a surface temperature of the electrode sheet when the electrode sheet was stationary (that was, when the winding guide roller speed was 0).

During the processing, under a stable operating condition, a surface temperature of the active layer of the negative electrode sheet and an internal temperature of the electrode sheet (that was, a temperature of the current collector) are shown in Table 1.

Example 3

A method for processing a negative electrode sheet was provided in this example, with the only difference from Example 2 being: a speed of the winding guide roller 32 was 60 m/min. The remaining steps were the same as those in Example 2.

During the processing, under a stable operating condition, a surface temperature of the active layer of the negative electrode sheet and a temperature of the current collector are shown in Table 1.

Example 4

A method for processing a negative electrode sheet was provided in this example, with the only difference from Example 2 being: a speed of the winding guide roller 32 was 40 m/min. The remaining steps were the same as those in Example 2.

During the processing, under a stable operating condition, a surface temperature of the active layer of the negative electrode sheet and a temperature of the current collector are shown in Table 1.

Example 5

A method for processing a negative electrode sheet was provided in this comparative example, with the only difference from Example 2 being: an induction frequency of the electromagnetic induction heating treatment was changed to 5 kHz. The remaining steps were the same as those in Example 2.

During the processing, under a stable operating condition, a surface temperature of the active layer of the negative electrode sheet and a temperature of the current collector are shown in Table 1.

Example 6

A method for processing a negative electrode sheet was provided in this example, with the only difference from Example 2 being: an induction frequency of the electromagnetic induction heating treatment was 10 kHz, and the remaining steps were the same as those in Example 2.

During the processing, under a stable operating condition, a surface temperature of the active layer of the negative electrode sheet and a temperature of the current collector are shown in Table 1.

Example 7

A method for processing a positive electrode sheet was provided in this example, differing from Example 2 in the following aspects.

(1) The negative electrode sheet was replaced with a positive electrode sheet. The positive electrode sheet in this example was a lithium iron phosphate battery electrode sheet, and a preparation method thereof included: lithium iron phosphate was used as a positive active material, mixed with conductive carbon black SP and polyvinylidene fluoride PVDF at a mass ratio of 96wt% to 2wt% to 2wt%, dispersed in N-methylpyrrolidone NMP, sequentially applied onto both sides of an aluminum foil, dried at 100°C to 120°C, and cold-rolled to obtain a dried positive electrode sheet with a CW of 324 mg/1540.25 mm$^2$, a thickness of 100 μm, and a coating width of 100 mm.

(2) An induction frequency of the electromagnetic induction heating treatment was adjusted to 20 kHz.

(3) A static temperature was adjusted to 500°C.

During the processing, under a stable operating condition, a surface temperature of the active layer of the positive electrode sheet and a temperature of the current collector are shown in Table 1.

Example 8

A method for processing a positive electrode sheet was provided in this example, with the only difference from Example 7 being: a speed of the winding guide roller 32 was 60 m/min. The remaining steps were the same as those in Example 7.

During the processing, under a stable operating condition, a surface temperature of the active layer of the positive electrode sheet and a temperature of the current collector are shown in Table 1.

Example 9

A method for processing a positive electrode sheet was provided in this example, with the only difference from Example 7 being: a speed of the winding guide roller 32 was 40 m/min. The remaining steps were the same as those in Example 7.

During the processing, under a stable operating condition, a surface temperature of the active layer of the positive electrode sheet and a temperature of the current collector are shown in Table 1.

Comparative Example 1

A negative electrode sheet was provided in this comparative example, where the negative electrode sheet was produced using a standard process and cold-rolled. Specifically, a preparation method of a negative electrode sheet in this comparative example included: 95wt% of artificial graphite as a negative active material, 1.0wt% of conductive carbon black, 2.0wt% of styrene-butadiene rubber SBR, and 2.0wt% of sodium carboxymethyl cellulose CMC were mixed, added with deionized water, stirred, and dispersed to form a negative electrode slurry. The negative electrode slurry was then applied onto a Cu foil, and after both sides were coated, the copper foil was dried and cold-rolled to obtain a negative electrode sheet with a total CW of 160 mg/1540.25 mm$^2$, a thickness of 70 μm, and a coating width of 105 mm.

Comparative Example 2

A positive electrode sheet was provided in this comparative example, where the positive electrode sheet was produced using a standard process and cold-rolled. Specifically, a preparation method of a positive electrode sheet in this comparative example included: lithium iron phosphate was used as a positive active material, mixed with conductive carbon black SP and polyvinylidene fluoride PVDF at a mass ratio of 96wt% to 2 wt% to 2wt%, dispersed in N-methylpyrrolidone NMP, sequentially applied onto both sides of an aluminum foil, dried, and cold-rolled to ultimately obtain a positive electrode sheet with a CW of 324 mg/1540.25 mm$^2$, a thickness of 100 μm, and a coating width of 100 mm.

Comparative Example 3

A method for processing a negative electrode sheet was provided in this comparative example, with the only difference from Example 2 being: an induction frequency of the electromagnetic induction heating treatment was 25 kHz. The remaining steps were the same as those in Example 2.

During the processing, under a stable operating condition, a surface temperature of the active layer of the negative electrode sheet and a temperature of the current collector are shown in Table 1.

Comparative Example 4

A method for processing a negative electrode sheet was provided in this comparative example, with the only difference from Example 2 being: an induction frequency of the electromagnetic induction heating treatment was changed to 30 kHz. The remaining steps were the same as those in Example 2.

During the processing, under a stable operating condition, a surface temperature of the active layer of the negative electrode sheet and a temperature of the current collector are shown in Table 1. During processing, it was found that the electrode sheet was burnt, causing powder shedding, and could not be used for battery assembly or electrochemical performance tests.

Comparative Example 5

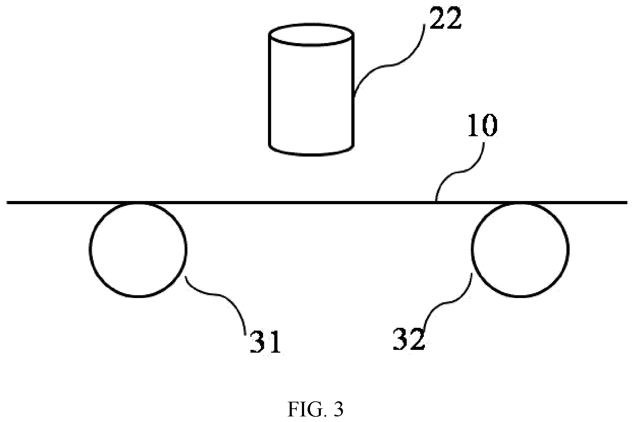

A method for processing a negative electrode sheet was provided in this comparative example, differing from Example 2 in that: the negative electrode sheet did not pass through the interior of the induction coil 22; instead, the induction coil 22 was placed above the negative electrode sheet, with the negative electrode sheet and the induction coil 22 positioned perpendicular to each other, as shown in FIG. 3. Under this condition, the negative electrode sheet was perpendicular to magnetic field lines generated after an alternating current was applied to the induction coil 22.

The remaining steps were the same as those in Example 2.

During the processing, under a stable operating condition, a surface temperature of the active layer of the negative electrode sheet and a temperature of the current collector are shown in Table 1. During processing, it was found that the electrode sheet was burnt, causing powder shedding, and could not be used for battery assembly or electrochemical performance tests.

Comparative Example 6

A method for processing a negative electrode sheet was provided in this comparative example, differing from Example 2 in that: in this comparative example, the negative electrode sheet was subjected to surface treatment through corona treatment. Specific steps were as follows.

The cold-rolled negative electrode sheet was placed on the unwinding guide roller 31 and the winding guide roller 32 of the electrode sheet processing system shown in FIG. 2, the electromagnetic induction heating unit 20 was removed, and an inductively coupled plasma apparatus was used to perform surface treatment on the negative electrode sheet, where surface treatment parameters were: a voltage of 50 V, a current of 100 mA, a reaction chamber pressure of 20 Pa, a gas flow rate of 1 L/min, treatment atmospheres of oxygen and methacrylic acid, and a processing speed of 80 m/min (speed of the winding guide roller).

Processing conditions of the electrode sheets in Examples 2 to 9 and Comparative Examples 1 to 6 are shown in Table 1. Performance tests were performed on the electrode sheets of Examples 2 to 9 and Comparative Examples 1 to 6, including electrolyte absorption rate, sheet resistance, adhesion strength, shear strength, K value, and the like, with results shown in Table 2 below.

Table 1. Electrode sheet processing conditions of examples and comparative examples

| | Induction frequency (kHz) | Electrode sheet placement manner (through/perpendicular) | Active layer surface temperature (°C) | Active layer surface temperature ≥ binder softening or melting temperature (negative electrode: SBR, -59°C; positive electrode: PVDF, 166°C-170°C) | Current collector temperature (°C) | Current collector temperature < current collector deformation temperature (negative electrode: copper foil (10 μm) 350°C-800°C; Positive electrode: aluminum foil (10 μm) ≈380°C) | Winding guide roller speed (m/min) |
|---|---|---|---|---|---|---|---|
| Example 2 (Negative electrode) | 15 | Through | 350 | Yes | 70 | Yes | 80 |
| Example 3 (Negative electrode) | 15 | Through | 300 | Yes | 60 | Yes | 60 |
| Example 4 (Negative electrode) | 15 | Through | 250 | Yes | 50 | Yes | 40 |
| Example 5 (Negative electrode) | 5 | Through | 160 | Yes | 35 | Yes | 80 |
| Example 6 (Negative electrode) | 10 | Through | 220 | Yes | 40 | Yes | 80 |
| Example 7 (Positive electrode) | 20 | Through | 400 | Yes | 75 | Yes | 80 |
| Example 8 | 20 | Through | 350 | Yes | 70 | Yes | 60 |

| | Induction frequency (kHz) | Electrode sheet placement manner (through/perpendicular) | Active layer surface temperature (°C) | Active layer surface temperature ≥ binder softening or melting temperature (negative electrode: SBR, -59°C; positive electrode: PVDF, 166°C-170°C) | Current collector temperature (°C) | Current collector temperature < current collector deformation temperature (negative electrode: copper foil (10 μm) 350°C-800°C; Positive electrode: aluminum foil (10 μm) ≈380°C) | Winding guide roller speed (m/min) |
|---|---|---|---|---|---|---|---|
| (Positive electrode) | | | | | | | |
| Example 9 (Positive electrode) | 20 | Through | 300 | Yes | 60 | Yes | 40 |
| Comparative Example 1 (Negative electrode) | / | / | / | / | / | / | / |
| Comparative Example 2 (Positive electrode) | / | / | / | / | / | / | / |
| Comparative Example 3 (Negative electrode) | 25 | Through | 500 | Yes | 350 | No | 80 |
| Comparative Example 4 (Negative | 30 | Through | 650 | Yes | 400 | No | 80 |

| | Induction frequency (kHz) | Electrode sheet placement manner (through/perpendicular) | Active layer surface temperature (°C) | Active layer surface temperature ≥ binder softening or melting temperature (negative electrode: SBR, -59°C; positive electrode: PVDF, 166°C-170°C) | Current collector temperature (°C) | Current collector temperature < current collector deformation temperature (negative electrode: copper foil (10 μm) 350°C-800°C; Positive electrode: aluminum foil (10 μm) ≈380°C) | Winding guide roller speed (m/min) |
|---|---|---|---|---|---|---|---|
| electrode) | | | | | | | |
| Comparative Example 5 (Negative electrode) | 15 | Perpendicular | 450 | Yes | 450 | No | 80 |
| Comparative Example 6 (Corona treatment) | / | / | / | / | / | / | / |

Table 2. Electrode sheet performance test results of examples and comparative examples

| | Electrolyte absorption time (s) | Sheet resistance (mΩ) | Adhesion strength (N/m) | Shear strength (MPa) | K value (mV/h) |
|---|---|---|---|---|---|
| Example 2 (Negative electrode) | 5.37 | 0.1534 | 17.52 | 0.75 | 0.0147 |
| Example 3 (Negative electrode) | 7.69 | 0.1749 | 17.85 | 0.72 | 0.0149 |
| Example 4 (Negative electrode) | 10.85 | 0.1833 | 16.98 | 0.76 | 0.0151 |
| Example 5 (Negative electrode) | 19.84 | / | / | / | / |
| Example 6 (Negative electrode) | 12.37 | / | 18.21 | 0.85 | 0.0156 |
| Example 7 (Positive electrode) | 4.38 | 0.1529 | 16.44 | 0.69 | 0.0145 |
| Example 8 (Positive electrode) | 5.41 | 0.1574 | 17.32 | 0.73 | 0.0146 |
| Example 9 (Positive electrode) | 7.49 | 0.1782 | 17.97 | 0.74 | 0.0149 |
| Comparative Example 1 (Negative electrode) | 23.57 | 0.2964 | / | / | 0.0171 |

(continued)

| | Electrolyte absorption time (s) | Sheet resistance (mΩ) | Adhesion strength (N/m) | Shear strength (MPa) | K value (mV/h) |
|---|---|---|---|---|---|
| Comparative Example 2 (Positive electrode) | 27.19 | 0.3573 | / | / | 0.0173 |
| Comparative Example 3 (Negative electrode) | / | 0.3594 | / | / | 0.0169 |
| Comparative Example 6 (Negative electrode) | / | 0.2242 | / | / | 0.0161 |

The data in Table 2 was processed to obtain change rates of electrolyte absorption rate, sheet resistance, K value, and the like of the electrode sheets after processing in the examples and comparative examples compared to unprocessed electrode sheets, as shown in Table 3.

**Table 3. Change rates of electrode sheet performance in examples and comparative examples**

| | Electrolyte absorption time change rate (%) | Sheet resistance change rate (%) | K value change rate (%) |
|---|---|---|---|
| Example 2 (Negative electrode) | -77.22 | -48.25 | -14.04 |
| Example 3 (Negative electrode) | -67.37 | -40.99 | -12.87 |
| Example 4 (Negative electrode) | -53.97 | -38.16 | -11.70 |
| Example 5 (Negative electrode) | -15.83 | / | / |
| Example 6 (Negative electrode) | -47.52 | / | -8.77 |
| Example 7 (Positive electrode) | -83.89 | -57.21 | -16.18 |
| Example 8 (Positive electrode) | -80.10 | -55.95 | -15.61 |
| Example 9 (Positive electrode) | -72.45 | -50.13 | -13.87 |
| Comparative Example 3 (Negative electrode) | / | +21.26 | -1.17 |
| Comparative Example 6 | / | -24.36 | -5.85 |
| (Negative electrode) | | | |

In Table 1, "Active layer surface temperature" and "Current collector temperature" refer to the surface temperature of the active layer and the temperature of the current collector respectively when the electrode sheet is under an operating condition driven by the winding guide roller; and typically, the surface temperature of the active layer is equivalent to the surface temperature of the electrode sheet. Under the operating condition, the surface temperature of the active layer is lower than the static temperature. "Electrode sheet placement manner" indicates the positional relationship of the electrode sheet relative to the induction coil, where "Through" means the electrode sheet passes through the interior of the induction coil; and "Perpendicular" means the electrode sheet is perpendicular to the induction coil, not passing through the interior of the induction coil.

In Table 3, the change rates of the items in Examples 2 to 6 and Comparative Examples 3 and 6 are change rates relative to Comparative Example 1, while the change rates of the items in Examples 7 to 9 are change rates relative to Comparative Example 2.

From Tables 2 and 3, it can be seen that:

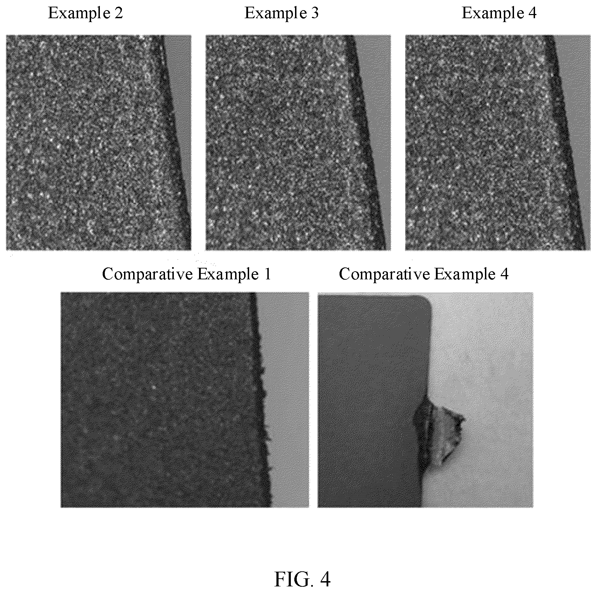

(1) The electrode sheets after electromagnetic induction heating treatment in Examples 2 to 9 exhibit high electrolyte absorption rates, where the electrolyte absorption time of the negative electrode sheets in Examples 2 to 6 can be reduced by 77.22% compared to Comparative Example 1 without electromagnetic induction heating treatment, that is, the electrolyte absorption rate can be increased by 77.22% compared to Comparative Example 1 without electromagnetic induction heating treatment, the electrolyte absorption time of the positive electrode sheets in Examples 7 to 9 can be reduced by 83.89% compared to Comparative Example 2 without electromagnetic induction heating treatment, that is, the electrolyte absorption rate can be increased by 83.89% compared to Comparative Example 2 without electromagnetic induction heating treatment. Moreover, from Examples 2, 5, and 6, it can be seen that within a certain range, as the electromagnetic induction heating frequency increases, the electrolyte absorption rate decreases, that is, the electrolyte absorption rate increases accordingly. With reference to the analysis of the active layer surface temperature in Table 1, the increase in electrolyte absorption rate is mainly because the surface temperature of the active layer can rise after the electrode sheet undergoes electromagnetic induction heating, and the binder in the active layer is softened or even ablated to remove floating binder, increasing the porosity of the electrode sheet, and thus increasing the electrolyte infiltration rate. It should be noted that an inappropriate electromagnetic induction heating frequency may result in an excessively high temperature of the electrode sheet, leading to burnout and powder shedding of the electrode sheet (as shown in Comparative Example 4 and FIG. 4).

(2) The electrode sheets that have been subjected to electromagnetic induction heating treatment in Examples 2 to 9 have lower sheet resistance compared to electrode sheets that have not been subjected to electromagnetic induction heating treatment, and this is mainly because the conductive agent in the electrode sheet is influenced by magnetic field lines during the electromagnetic induction heating process, aligning in a consistent direction, which is conducive to reducing the sheet resistance of the electrode sheet. In addition, an inappropriate electromagnetic induction heating frequency may result in an excessively high temperature of the current collector of the electrode sheet, leading to deformation of the current collector. Thus, excessive pores are present between the current collector and the active material, resulting in a state close to powder shedding, thus ultimately causing the sheet resistance of the electrode sheet to increase rather than decrease (as shown in Comparative Example 3).

(3) After electromagnetic induction heating treatment of the electrode sheet, the corresponding K value of the battery is reduced, which, in addition to the aforementioned increased porosity of the electrode sheet and changes in the direction of the conductive agent, is also due to that the softening (melting) or ablation of the binder can reduce various burrs and particles at the edges of the active layer, making the active layer surface smoother and reducing the surface sharpness of the electrode sheet, thereby reducing the risk of the electrode sheet piercing a separator. Specifically, as shown in FIG. 4, the electrode sheet in Comparative Example 1 without electromagnetic induction heating treatment has many edge burrs, while the electrode sheets in Examples 2 to 4 after electromagnetic induction heating treatment have no burrs or particles at the edges, with smooth edges.

(4) The electrode sheets after electromagnetic induction heating treatment in Examples 2 to 9 have high adhesion strength and shear strength, where the adhesion strengths are all above 15 N/m and the shear strengths are greater than 0.5 MPa, meeting market requirements for electrode sheet adhesion strength and shear strength. This also indicates that after appropriate electromagnetic induction heating treatment, the active layer and the current collector can still maintain tight bonding, which is conducive to stability during charge-discharge cycles (the active layer is less likely to be detached from the current collector).

(5) Processing the electrode sheet through electromagnetic induction heating, compared to traditional corona treatment (as shown in Comparative Example 6), can better increase the electrolyte absorption rate of the electrode sheet, reduce the sheet resistance of the electrode sheet, and increase the K value of the battery.

Appendix: The relevant performance test methods in the above Table 2are as follows.

(1) Sheet resistance test method

A sheet resistance tester from Initial Energy Science & Technology was used to test sheet resistance. Small discs with a diameter of 10 mm were respectively cut from the left, middle, and right parts of the electrode sheet. An indicator light of the sheet resistance tester from Initial Energy Science & Technology was turned on, each small disc was placed at an appropriate position on a "probe" of the sheet resistance tester, a "Start" button was clicked, and the reading was recorded once stabilized. Each small disc was tested at two positions, and an average value of the six measurement results was calculated as the sheet resistance of the electrode sheet.

(2) Adhesion strength test method

The electrode sheet was cut into a test sample with a dimension of 20*100 mm$^2$ for later use; the test sample was adhered to a side to be tested using a double-sided tape and pressed with a roller to ensure complete adhesion between the double-sided tape and the sample; the other side of the double-sided tape of the sample was adhered to a stainless steel surface, with one end of the sample being bent backward at a bending angle of 180°; a GOTECH tensile machine was used for testing, with one end of the stainless steel being fixed to a lower clamp of the tensile machine, and the bent end of the sample being fixed to an upper clamp; the sample angle was adjusted to ensure that the upper and lower ends were located vertically; then the sample was stretched at a speed of 50 mm/min until the sample was completely peeled from a substrate; the displacement and acting force during the process were recorded; and generally, the force at equilibrium was considered as the adhesion strength of the electrode sheet.

(3) Electrolyte absorption rate test of electrode sheet

The electrode sheet was fixed to a clean glass plate, a capillary with an inner diameter of 0.3 mm was used to suck a 3 mm height of electrolyte (a composition of the electrolyte includes EC, DMC, and EMC at a volume ratio of 3:2:1, as well as 1 mol/L lithium salt $LiPF_6$), the capillary was brought into vertical contact with the electrode sheet to allow the electrode sheet to absorb the electrolyte, where the a for the electrode sheet to completely absorb the electrolyte (electrolyte absorption time) was measured, and the electrolyte absorption time was used to reflect the electrolyte absorption rate of the electrode sheet.

(4) Shear strength test

A double-sided tape which was approximately 60 mm long was cut and adhered along an MD direction (longitudinal direction) of the electrode sheet; the electrode sheet was cut along an edge of the double-sided tape using a blade; a flat steel plate was selected; a surface of the steel plate was polished with sandpaper; the surface of the steel plate was wiped with cotton gauze dipped in alcohol, and was dried; an adhesive paper was adhered to the steel plate, where a distance from the bottom edge of the tape to the bottom edge of the steel plate was greater than 1 cm; the steel plate was placed in an oven at 60°C to 80°C for 5 min; the steel plate was taken out; release paper on the tape was gently scraped off with a blade; and the cut electrode sheet was placed on the double-sided tape, with the test surface facing down. A 2 kg roller was used to roll the electrode sheet back and forth 3 times; the tensile machine was powered on; the indicator light was turned on; a limit block was adjusted to an appropriate position; an end of the steel plate without the electrode sheet was fixed with a lower clamp; the upper clamp held the unbonded end of the electrode sheet; a dedicated computer connected to the tensile machine was turned on; a "U60" software icon on the desktop was double-clicked; parameters of the tensile machine were set, with a test speed set to 10 mm/min; after the positions of the upper and lower clamps were adjusted, a "Clear" icon for displacement and force values in the test software was clicked; after the parameters were cleared, a "Test" icon was clicked; a peak appeared in a test curve; the electrode sheet was completely separated from the steel plate; and the test automatically stopped. The raw data was exported; a fracture mode of the electrode sheet was recorded and photographed; the length and width of a damaged region of the electrode sheet were measured to calculate an actual bonding area S ($mm^2$); a peak value of the curve was selected as a maximum shear force Fs (N) of the electrode sheet; the shear strength of the electrode sheet was calculated according to Q = Fs/S, measured in MPa; and after all samples were tested, the tensile machine was powered off, and a table surface was cleaned.

(5) K value test

A self-discharge test system was used to test the K value, where the self-discharge test system model was: Auto-OCV/IMP-21173/26148 (Purpose: for lithium battery performance test).

Working principle: The self-discharge test system includes an automatic transport cart, a docking platform, a resting (aging) rack, and a battery voltage and internal resistance testing device. The automatic transport cart moved batteries from the docking platform at the front end of the system to the resting (aging) rack, and after the set resting (aging) time was reached, the automatic transport cart moved the batteries that have completed the resting (aging) time to the voltage and internal resistance testing device for voltage and internal resistance testing; the corresponding test data was recorded. Batteries that have completed all tests were transported to a material output position at a rear end of the system by a conveyor; and the system automatically sorted defective products and transferred the batteries to the shipping state.

$$K \text{ value} = [OCVB \text{ (voltage after resting)} - OCV1 \text{ (voltage before resting)}] / \text{resting time.}$$

Finally, it should be noted that: the above embodiments are only used to illustrate the technical solutions of this application rather than to limit them. Although this application has been described in detail with reference to the foregoing embodiments, those of ordinary skill in the art should understand that: the technical solutions described in the foregoing embodiments can still be modified, or some or all of the technical features can be equivalently replaced. These modifications or replacements do not cause the essence of the corresponding technical solutions to depart from the scope of the technical solutions of the embodiments of this application, and they should be included within the scope of the claims and the specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1.  An electrode sheet processing system, **characterized by** comprising: an electromagnetic induction heating unit, wherein the electromagnetic induction heating unit is configured to perform electromagnetic induction heating treatment on an electrode sheet; and optionally, the electrode sheet comprises a dried active layer.

2.  The electrode sheet processing system according to claim 1, **characterized in that** the electromagnetic induction heating unit comprises an induction coil, wherein the induction coil is configured to generate alternating magnetic induction lines parallel to the electrode sheet.

3.  The electrode sheet processing system according to claim 1 or 2, **characterized in that** the electrode sheet processing system further comprises a temperature measurement unit, wherein the temperature measurement unit is configured to measure a temperature of the electrode sheet.

4.  The electrode sheet processing system according to claim 3, **characterized in that** the temperature measurement unit comprises an infrared temperature measurement module.

5.  The electrode sheet processing system according to claim 3 or 4, **characterized in that** the electrode sheet processing system further comprises an automatic temperature control unit, wherein the automatic temperature control unit is configured to control heating parameters of the electromagnetic induction heating unit.

6.  A method for processing an electrode sheet, **characterized in that** the electrode sheet comprises a current collector and an active layer, wherein the active layer is disposed on at least one side of the current collector; the active layer comprises a binder; and the method comprises: performing electromagnetic induction heating treatment on the electrode sheet to make sure that a surface temperature of the active layer is greater than or equal to a softening temperature or a melting temperature of the binder and that a temperature of the current collector is less than a deformation temperature of the current collector.

7.  The method for processing an electrode sheet according to claim 6, **characterized in that** the electromagnetic induction heating treatment step comprises: making the electrode sheet pass through an interior of an induction coil, and applying an alternating current to the induction coil.

8.  The method for processing an electrode sheet according to claim 6 or 7, **characterized in that** an induction frequency of the electromagnetic induction heating treatment is greater than or equal to 5 kHz; optionally, the induction frequency of the electromagnetic induction heating treatment is 10 kHz to 50 kHz; and optionally, the induction frequency of the electromagnetic induction heating treatment is 10 kHz to 20 kHz.

9.  The method for processing an electrode sheet according to claim 7, **characterized in that** the number of turns of the induction coil is 2 to 10; and optionally, the number of turns of the induction coil is 2 to 5.

10. The method for processing an electrode sheet according to claim 7 or 9, **characterized in that** the electrode sheet moves relative to the induction coil; optionally, a moving speed of the electrode sheet relative to the induction coil is 10 m/min to 100 m/min; and optionally, the moving speed of the electrode sheet relative to the induction coil is 40 m/min to 80 m/min.

11. The method for processing an electrode sheet according to any one of claims 6 to 10, **characterized in that** the surface temperature of the active layer is 100°C to 450°C; and optionally, the surface temperature of the active layer is 220°C to 400°C.

12. An electrode sheet, **characterized in that** the electrode sheet is obtained by processing performed using the method according to any one of claims 6 to 11.

13. A battery, **characterized in that** the battery comprises the electrode sheet according to claim 12.

14. An electric apparatus, **characterized in that** the electric apparatus comprises the battery according to claim 13.

FIG. 1

FIG. 2

FIG. 3

Example 2　　　　　Example 3　　　　　Example 4

Comparative Example 1　　　Comparative Example 4

FIG. 4

FIG. 5

FIG. 6

FIG. 7

FIG. 8

5

53

52

52

51

FIG. 9

FIG. 10

## INTERNATIONAL SEARCH REPORT

| International application No. |
| --- |
| **PCT/CN2023/097237** |

**A.      CLASSIFICATION OF SUBJECT MATTER**

H01M4/04(2006.01)i

According to International Patent Classification (IPC) or to both national classification and IPC

**B.      FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 极片, 加热, 粘结剂, 粘接剂, 电磁, electrode, heat, binder, electromagnetic

**C.      DOCUMENTS CONSIDERED TO BE RELEVANT**

| Category* | Citation of document, with indication, where appropriate, of the relevant passages | Relevant to claim No. |
| --- | --- | --- |
| X | CN 113036149 A (DALIAN CBAK POWER BATTERY CO., LTD.) 25 June 2021 (2021-06-25) description, paragraphs 11-66 | 1-14 |
| X | CN 210006816 U (HUZHOU JUDA POWER SUPPLY CO., LTD.) 31 January 2020 (2020-01-31) description, paragraphs 3-23, and figures 1-2 | 1-14 |
| X | CN 206490132 U (NINGDE CONTEMPORARY AMPEREX TECHNOLOGY CO., LTD.) 12 September 2017 (2017-09-12) description, paragraphs 8-50, and figures 1-5 | 1-14 |
| X | CN 114739144 A (GUANGDONG KATOP AUTOMATION TECHNOLOGY CO., LTD.) 12 July 2022 (2022-07-12) description, paragraphs 5-66, and figures 1-16 | 1-14 |
| X | CN 218655318 U (BEIJING WELION NEW ENERGY TECHNOLOGY CO., LTD.) 21 March 2023 (2023-03-21) description, paragraphs 5-38, and figures 1-2 | 1-14 |

☑ Further documents are listed in the continuation of Box C.      ☑ See patent family annex.

| *      Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **06 December 2023** | **21 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/097237** |

**C.    DOCUMENTS CONSIDERED TO BE RELEVANT**

| Category* | Citation of document, with indication, where appropriate, of the relevant passages | Relevant to claim No. |
|---|---|---|
| X | CN 115190666 A (SHENZHEN HYMSON LASER INTELLIGENT EQUIPMENTS CO., LTD.) 14 October 2022 (2022-10-14) description, paragraphs 3-46, and figures 1-3 | 1-14 |
| A | CN 115440931 A (JI HUA LABORATORY) 06 December 2022 (2022-12-06) entire document | 1-14 |

Form PCT/ISA/210 (second sheet) (July 2022)

**INTERNATIONAL SEARCH REPORT**
Information on patent family members

International application No.

**PCT/CN2023/097237**

| Patent document cited in search report | | | Publication date (day/month/year) | Patent family member(s) | Publication date (day/month/year) |
|---|---|---|---|---|---|
| CN | 113036149 | A | 25 June 2021 | None | |
| CN | 210006816 | U | 31 January 2020 | None | |
| CN | 206490132 | U | 12 September 2017 | None | |
| CN | 114739144 | A | 12 July 2022 | None | |
| CN | 218655318 | U | 21 March 2023 | None | |
| CN | 115190666 | A | 14 October 2022 | None | |
| CN | 115440931 | A | 06 December 2022 | None | |

Form PCT/ISA/210 (patent family annex) (July 2022)